(19) **Europäisches Patentamt**

**European Patent Office**

**Office européen des brevets**

(11) **EP 0 625 091 B1**

(12) **EUROPEAN PATENT SPECIFICATION**

(45) Date of publication and mention
of the grant of the patent:
**08.09.1999 Bulletin 1999/36**

(21) Application number: **93904681.9**

(22) Date of filing: **03.02.1993**

(51) Int. Cl.⁶: **B29C 49/00**, B29C 45/00,
B29C 51/00, B65D 65/38,
C08L 67/02

(86) International application number:
**PCT/US93/00741**

(87) International publication number:
**WO 93/14922 (05.08.1993 Gazette 1993/19)**

(54) **ELEVATED TEMPERATURE DIMENSIONALLY STABLE POLYESTER WITH LOW GAS PERMEABILITY**

WARMEFORMBESTANDIGE POLYESTER MIT NIEDRIGER GASDURCHLASSIGKEIT

POLYESTER A DIMENSIONS STABLES A TEMPERATURE ELEVEE AVEC FAIBLE PERMEABILITE AU GAZ

(84) Designated Contracting States:
**AT BE CH DE DK ES FR GB GR IE IT LI LU MC NL PT SE**

(30) Priority: **03.02.1992 US 829478**
**03.04.1992 US 863204**
**22.06.1992 US 903076**
**17.07.1992 US 914388**
**05.01.1993 US 997708**

(43) Date of publication of application:
**23.11.1994 Bulletin 1994/47**

(73) Proprietor:
**Lawson Mardon Thermaplate Corporation**
**Piscataway, New Jersey 08854 (US)**

(72) Inventors:
• **DALGEWICZ, Edward, J., III**
**Annandale, Virginia 22003 (US)**
• **FREUNDLICH, Richard, A.**
**Plainsboro, NJ 08536 (US)**
• **BOND, John**
**Pittsburgh, PA 15217 (US)**

(74) Representative:
**Richebourg, Michel François et al**
**Cabinet Michel Richebourg,**
**"Le Clos du Golf",**
**69, rue Saint-Simon**
**42000 Saint Etienne (FR)**

(56) References cited:
**EP-A- 0 081 144          EP-A- 0 081 144**
**EP-A- 0 221 336          EP-A- 0 221 336**
**FR-A- 2 522 580          US-A- 4 535 025**
**US-A- 4 535 025          US-A- 4 820 795**
**US-A- 4 820 795**

• **Polymer Bulletin, vol. 19, no. 4, 1988, W. PERKINS: "Effect of molecular weight and annealing temperature on the oxygen barrier properties of oriented PET film", see whole document**
• **WPI, AN=79-37836B (20), Derwent Publications Ltd, (London, GB), & JP,A,54043972 (DIA FOIL K.K.) 6 April 1979, see abstract**

**Description**

Technical Field

The invention relates to a process for producing a thermoplastic crystallizable polyester or a composition comprising such a polyester. More specifically, the invention relates to a process for producing a crystallizable polyester or crystallizable polyester composition which provides a gas barrier characterized by an oxygen permeability of from 0.2 to 4.9 cc-mil/100 in$^2$ (650 cm$^2$)-24 hr-atm at 23°C and relative humidity of 60 % outside/100 % inside, has a linear dimensional shrinkage of less than 6 % between 23°C and 200°C, and has an enthalpy of recrystallization greater than -2.1 cal/g between about 100°C and about 170°C as determined by heating differential scanning calorimetry (DSC). Due to its high dimensional stability, the product produced by the process of the invention is useful as a container for food products, particularly those that are cooked either by microwave or conventional ovens. Additionally, due to its low gas permeability, the product produced by the process of the invention is useful for increasing the shelf life of food and beverage products at temperatures from about -60°C to about 215°C.

Background Art

Polyesters have heretofore been widely used in the food package industry, including blister packs for meats, containers for frozen foods, ovenable and microwavable (《dual ovenable》) trays and carbonated beverage bottles. A major effort in such packaging applications has been directed toward reducing the gas permeability of the package, since a decrease in such permeability will lead to a longer shelf life of the food product, be it at frozen, refrigerated or ambient temperature storage. Another focus of great effort in the food packaging industry is the dimensional stability of the package over long periods of time at ambient temperature or upon heating of the contents in either microwave or conventional ovens. Of particular concern in this regard are the breakage of seals and warping due to excessive shrinkage of the container during retort or any of the thermal sterilization processes.

A number of prior patents have addressed the above-mentioned concerns, for the most part individually. As a result, for example, polyester compositions that are particularly suitable as carbonated beverage containers due to there low gas permeability, are generally unsuitable for applications and processes requiring elevated temperatures, as these materials generally exhibit excessive shrinkage and warping at these higher temperatures. Examples of such prior activity include:

U.S. Pat. No. 4,560,741 discloses a polyester resin derived from a $C_{2-8}$ diol, oxydiacetic acid and naphthalene dicarboxylic acid having improved resistance to gas permeability as compared to polyethylene terehpthalate homopolymers.

U.S. Pat. No. 3,960,807 discloses a heat-set article comprising a polymeric crack-stopping agent and a nucleant as having a good dimensional stability and impact resistance.

U.S. Pat. No. 4,463,121 discloses thermoformed articles of partially crystallized polyethylene terephthalate and a polyolefin, as having improved impact resistance and high temperature dimensional stability.

U.S. Pat. No. 4,572,852 discloses crystalline polyethylene terephthalate/polyolefin article as having high dimensional stability.

U.S. Pat. No. 4,618,515 discloses a polyethylene terephthalate wide mouth bottle wherein the neck portion has higher thermal and strain crystallinity than the rest of the bottle, such that the neck is more resistant to shrinkage during a hot-fill process.

U.S. Pat. No. 4,535,025 discloses a biaxially-oriented, heat-set polyethylene terephthalate material with a density of over 1,4050 g/cc at 25°C as having improved gas barrier properties.

U.S. Pat. No. 4,282,277 discloses a biaxially-oriented thermoset polymer seamless conduit as having good low temperature tensile impact strength.

U.S. Pat. No. 5,003,041 discloses blends of polyethylene terephthalate and trans-4,4'-stilbenedicarboxylic acid as having improved gas barrier properties as compared to polyethylene terephthalate homopolymer.

U.S. Patent No. 4,764,403 discloses a biaxially-oriented, heat-set, multi-layer article with an inner layer of polyethylene terephthalate, as having good barrier properties and improved thermal stability.

U.S. Patent 4,874,647 discloses a composition of polyethylene terephthalate and bisphenol-A polycarbonate for use in a polyester laminate. The composition is disclosed as providing for improved mechanical strength for a heat resistant polyester.

U.S. Pat. No. 4,061,706 discloses a continuous melt process for thermoforming thermoplastic polymers, preferably polyamides.

U.S. Pat. No. 4,261,473 discloses a container made of thermoplastic resin, oriented in at least one direction, as having an oxygen permeability of lower than $5x10^{-11}$ cc-cm/cm$^2$-sec-cm Hg.

U.S. Pat. No. 4,469,270 discloses a shaped container of polyalkylene terephthalate with a crystallinity of at least 20 percent as determined by density measurement.

U.S. Pat. No. 4,996,269 discloses a thermoplastic resin of polyethylene naphthalate and a polyester elastomer and having a crystallinity from 10 to 40 percent as measured by density, as having improved dimensional stability.

U.S. Pat N° 4,713,268 discloses ovenable trays formed from poly (ethyleneterephtalate) modified with 4 - 29 % core/shell polymer, 0 - 14.5 % aromatic polycarbonate and 1 - 5 % aromatic polyester crystallization rate accelerator.

The conventional process for manufacturing polyester containers, herein referred to as a 《glass-to-mold 》 process, has at least two heating steps; the first during production of the polyester source material (e.g., by a supplier), and the second during shaping of the polyester into a container (e.g., by a manufacturer). In the first step of the conventional process, the source polyester material is cooled as it is formed into pellets, rolls, sheets or other shapes suitable for shipping, storage and subsequent processing into articles of manufacture. In many processes, such as that for producing amorphous polyethylene terephthalate (A-PET), the cooling of the material from the molten state is at a sufficiently rapid rate so as to thermally quench most of the dynamic crystallization of the polymer and thus produce an undercrystallized material. In addition, thermal gradients may arise in the polyester during heating and cooling. The material stresses due to these thermal gradients then become frozen in the ambient temperature material. Such stresses due to thermal gradients are referred to herein as thermally induced stresses.

In the second step of conventionally producing articles made of polyesters, the pellets, sheets, etc. of polyester made in the first step are reheated until the material reaches a recrystallization onset temperature. At this point recrystallization of the material begins. Increased crystallinity is desirable in a product as it increases the melting temperature of the polyester so as to allow it to be used in a conventional oven for reconstitution.

Recrystallization upon reheating of a crystallizable polyester may be due to the further growth of existing crystals in the material or to the formation of new crystals, or both. The recrystallization onset temperature of a polyester may be easily detected by heating differential scanning calorimetry as that temperature at which the exothermic recrystallization reaction begins. The recrystallization onset temperature of a polyester material as determined in this way is localized to a temperature between the glass transition temperature and the melting temperature of the material and is dependent upon polymer chain length and composition, and the heating rate.

In the conventional thermoforming process, the heated polyester is then maintained at or near the recrystallization onset temperature until the desired degree of crystallinity is achieved, after which the material is molded and rapidly cooled. During glass-to-mold thermoshaping, additional undesirable thermal stresses may also be introduced into the polyester article at this second cooling step.

Molded polyester articles made by the conventional glass-to-mold manufacturing process, upon reheating to the recrystallization onset temperature of the material, begins to recrystallize. Such a situation presents a serious drawback to articles made by conventional processes, particularly those used as containers for the storage of foodstuffs and products that are meant to remain in sterilized state or are meant to be reheated to at or above the recrystallization onset temperature. Because of the recrystallization of the container on subsequent reheat, additional shrinkage may result in not only product deformation, by also seal breakage or complete product failure as a container or barrier. Thus, a substantial number of previously sterilized items within a polyester container made by conventional processes must be discarded, resulting in a substantial amount of waste.

It is also known that amorphous phase polymer chains may be axially or bi-axially oriented by applying force, in either one or two directions, respectively, to the polymeric material while it is in a semi-fluid state, usually above the glass transition temperature (Tg) of the polymer. To achieve such a polymer chain orientation, a mechanical force is continuously applied as the polymeric material is cooled to below its Tg. It is known that such orientation of the polymers in a material decreases the gas permeability of the material as compared to a non-oriented polyester. For polyethylene terephthalate, such orientation reduces the oxygen permeability at 0 % humidity from about 10 cc-mil/100 in$^2$-day-atm to 5 cc-mil/100 in$^2$-day-atm. However, chain orientation by this method results in mechanical stresses becoming frozen in the ambient temperature materiel. Heating of the oriented material to near or above the Tg results in the release of the physically induced stress contained therein, with the result that the materiel undergoes substantial dimensional distortion. Such distortion may also occur over long periods of time at ambient temperature. Thus, although the gas barrier properties of oriented materials make them particularly suitable for uses such as carbonated beverage containers, these same materials are wholly unsuitable for use where temperatures near or above the Tg of the material will be encountered. In particular, such oriented materials are unsuitable for use in retort, hot-fill and high temperature sterilization processes.

The thermally and physically induced stresses in a polyester result in a molecular imprinting of the past thermal history of the material, generally referred to as 《 memory 》. Such memory can only be completely removed from the material by reheating the polyester to above the melting temperature for a sufficient time to bring the material to a substantially completely amorphous, molten state. Such high temperatures, however, are not used in the glass-to-mold thermoforming process. As a result, articles made in this way retain much of the stress introduced in their process of manufacture.

Thus, another drawback to articles made by the glass-to-mold process is that upon reheat some of the thermally and mechanically induced stresses frozen in the polyester are relieved, which may result in severe dimensional changes in the molded material. The greater degree of thermally and mechanically induced stresses imprinted in an article, the greater the potential for deformation therein upon reheating. As with the dimensional changes associated with recrystallization, distortions due to stress release can cause container seal failure and seam failure, with the resultant loss of sterility of the foodstuffs contained therein. Such stress release may additionally cause undesired warping during retort, hot-fill and high temperature sterilization processes. As meant within this disclosure, the sum of the dimensional changes upon heating a polyester due to recrystallization and stress release are referred to as the thermal dimensional stability of the polyester. Such a characterization of the thermal dimensional stability of a polyester may be conveniently expressed as the percent change in either linear, planar or volume dimensions, as appropriate, for a polyester article, that results from elevating the temperature of the article from about -60°C to a temperature just below the onset of melting of the article. For example, for polyethylene terephthalate, this temperature range is from about -60°C to about 200°C.

An additional drawback to polyester articles manufactured by the glass-to-mold process is that since these polyesters retain a memory and may be undercrystallized, the use of scrap material derived in the manufacture of these articles is made less than highly desirable for inclusion in heat-based reclamation processes, as the stress memory and sub-optimal crystallinity will becom incorporated in the recycled material, thereby conferring an undesirable thermal dimensional instability on the recycled article.

A further undesirable consequence of the conventional glass-to-mold process of manufacturing a polyester article is the additional energy that must be expended to reheat the polymer prior to the shaping process. Such additional heating is both time consuming and energy-inefficient.

In light of the above considerations, there clearly exists a need for a polyester that is dimensionally stable at both low and high temperature, while at the same time provides an improved gas barrier. Preferably, such a product would be sterilizable by temperature, pressure, chemical and/or radiation methods. Still more preferably, such a polyester would be compatible with use for containing foodstuffs, beverages, and the like, and would be dual ovenable (i.e., both microwaveable and ovenable at high temperature). It would additionally be advantageous for such a product to be recyclable, so as to both decrease the cost of manufacture and provide a product that is environmentally sound.

One object of the invention is to provide a process for the production of a thermoplastic crystallized polyester having improved properties as a gas barrier. Another object of the invention is to provide a process for the production of a thermoplastic polyester having improved dimensional stability over a wide temperature range. A third object of the invention is to provide a process for the production of a thermoplastic polyester having both improved gas barrier properties and improved dimensional stability over a wide temperature range. Another object of the invention is to provide a process for the production of a polyester article that is duel ovenable and that is useful as a container for foodstuffs.

Disclosure of the Invention

The invention provides a process for the production of a moldable thermoplastic crystalline polyester with intrinsic viscosity from 0.65 to 1.1 that provides a gas barrier characterized by an oxygen permeability of from 0.2 to 4.9 cc-mil/100 in$^2$ (650 cm$^2$)-24 hrs-atm at 23°C and at 60 % relative humidity outside/100 % relative humidity inside, while also having an enthalpy of recrystallization upon heating of from 0 to -2.1 calories per gram as determined by heating differential scanning calorimetry, as well as a linear dimensional shrinkage of from 0 % to 6 % upon heating from -60°C to 200°C.

The invention also provides for a process for the production of a shaped article of manufacture comprising the above polyester, as well as of a composition and of a shaped article comprising the above crystalline polyester.

The invention provides a process for producing a dimensionally stable polyester with improved gas barrier properties comprising the steps :

(a) heating a composition comprising a crystallizable polyester to a temperature above the melting point temperature of the polyester for a time sufficient to bring said polyester to a substantially amorphous (greater than 99 weight %) molten state ;

(b) controlling cooling of the composition as obtained in step (a) so as to maintain the polyester at a temperature above the peak crystallization rate temperature of said crystallizable polyester, while simultaneously contacting said polyester to a surface capable of imparting shape to said polyester, for 20 seconds to 5 minutes ;

(c) continuing controlled cooling of the composition by contacting the composition to the said surface capable of imparting shape at a cooling rate of 5° C to 80° C per minute, said contact surface being at a temperature of at least the lower boundary crystallization temperature from melt of said polyester to provide a polyester, wherein said polyester has an oxygen permeability of from 0.2 to 4.9 cc-0.025 mm / 650 $cm^2$-24 hrs-atm at 23°C and at 100 % relative humidity inside and 60 % relative humidity outside ; and an enthalpy of recrystallization from 0 to - 2.1 calories per gram as determined by differential scanning calorimetry at a heating rate of 25°C / min, and having a linear dimensional shrinkage of from 0 % to 6 % when heated from - 60°C to 200°C.

Brief Description of the Drawings

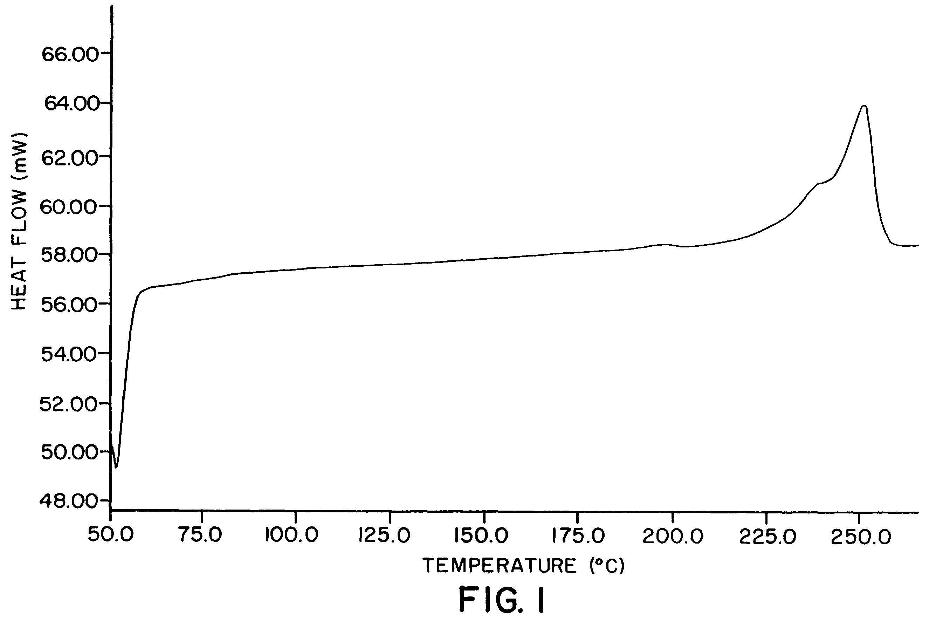

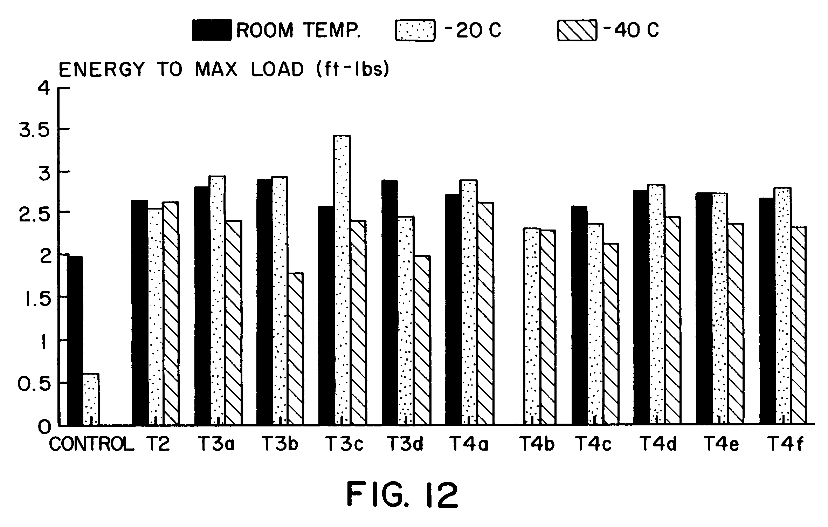

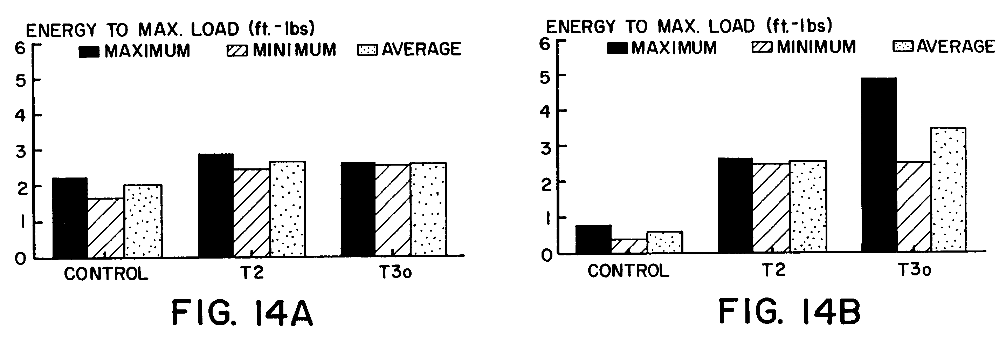

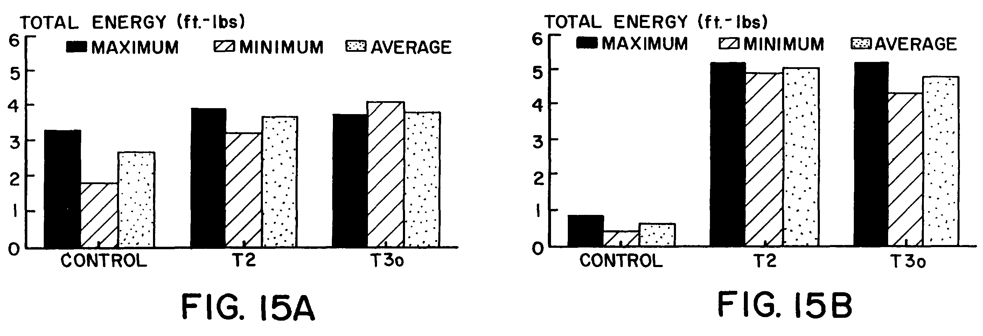

Figures 1 through 11 depict differential scanning calorimetry thermograms of polyester compositions made from the present melt-to-mold process and the prior glass-to-mold process. Figures 12 to 15 graphically depict the impact resistance of an impact modified polyester resin of the invention at ambient temperature, -20°C and -40°C.

Mode(s) for Carrying Out the Invention

Crystallizable polyesters as meant herein are those polyester homopolymers, heteropolymers and blends in which at least 10 % of the final material is capable of existing in a crystalline state at ambient temperature. Examples of such crystallizable polyester homopolymers include the alkylene terephthalate and naphthalate homopolymers such as, for example, polyethylene terephthalate (PET), polypropylene terephthalate, polybutylene terephthalate (PBT), polymethylpentene terephthalate, polycyclohexenedimetylyene terephthalate, polyethylene naphthalate (PEN), polypropylene naphthalate, polybutylene naphthalate, as well as polyterephthalic acid (PTA), polycycloterephthatlic acid (PCTA), and cyclohexanedimethanol (CHDM). Modified polyesters, particularly glycol modified polyesters of, for example, PET, PBT, PEN and PCTA are also known to be crystallizable. Furthermore, certain copolymers of the above compounds are also crystallizable polyesters, as are blends of these homopolymers, blends of copolymers and blends of heteropolymers.

The product produced by the process of the invention is thought to achieve its desirable homogeneity, gas permeation, recrystallization and dimensional stability at elevated temperatures due to its novel process of manufacture, herein referred to as a 《 melt-to-mold 》 process. Without being limited by theory, it is believed that these superior properties are related to both the fact that the polyester starting material is in a completely or substantially completely amorphous, molten state, thereby having little, if any, memory at the outset and that the cooling rate from melt and time at temperatures conductive to crystallization is controlled. By 《 substantially completely amorphous 》 it is meant that the amount of polyester that is not melted to a completely amorphous molten state is not great enough to yield a materiel that exceeds the gas permeability, dimensional stability and enthalpy of recrystallization (as determined by heating DSC) that characterize the material of the invention. Thus, it is envisioned that small amounts (e.g., less than 1 weight percent) of non-molten material will not substantially affect the permeability and recrystallization characteristics of the polyester or article of manufacture produced by the process of the invention.

The low degree of stresses and highly developed crystals result in a product with improved dimensional stability at elevated temperatures which at the same time provides an efficient gas barrier. What follows is a brief discussion of the theoretical aspects of polyester crystal formation that are thought to explain in part the uniqueness of the process of the invention and of the resulting product.

Crystallizable polymers generally exist at ambient temperature as a mixture of amorphous, crystalline and boundary phases. In the amorphous phase, the polymer chains are generally without large scale order with respect to one another. In the crystalline phase the polymer chains are highly ordered, and in the boundary phase between the crystal and amorphous phases, the polymer chains are intermediate in order as compared to the other two phases. The percentage of a crystallizable polymer material that is in each of the above-mentioned three phases is dependent on the thermal history of the material.

At sufficiently high temperature (i.e., hereinafter referred to as the 《melting temperature 》) or above, and after sufficient time if the polyester has had a previous thermal history, polyesters achieve a completely amorphous or substantially completely amorphous, molten state. The melting temperature of a polyester is most accurately determined by DSC, as the temperature at which the endothermic melting of the polyester is achieved. For example, for a typical polyethylene terephthalate, this temperature is about 250°C. Polyesters which have not been previously cooled below the melting temperature, and thus have no thermal or mechanical history embedded therein also exist in the amorphous state.

Generally, as the temperature of an amorphous crystallizable polyester is lowered, an upper crystallization onset temperature from melt is reached, at which point the polymer chains begin to order and crystallization of the material begins. The 《upper crystallization onset temperature from melt 》 as used herein is the temperature, at atmospheric pressure, wherein the exothermic dynamic crystallization reaction in a cooling crystallizable polymer melt begins, as determined by the beginning of the exothermic dynamic crystallization reaction measured by cooling differential scanning calorimetry. For molten PET, the upper crystallization onset temperature is between from about 170°C to about 210°C at a cooling rate of about 20°C/min. As used herein, the 《dynamic crystallization reaction 》 and 《dynamic crystallization 》 refers to the aforementioned crystallization of a polyester upon cooling of a substantially molten polyester. By contrast, 《recrystallization 》 as used herein is that crystallization that can occur upon heating of a polyester, for example from ambient temperature to a temperature at which crystallisation proceeds.

As the crystallizable polymer continues to cool, a lower boundary crystallization temperature is reached, where at the dynamic crystallization from melt ceases. The 《lower boundary crystallization temperature from melt 》, is that temperature at which the exothermic dynamic crystallization reaction ceases, again as conveniently determined by cooling differential scanning calorimetry. For PET, the lower boundary crystallization temperature is from about 180°C to about 150°C, at a cooling rate of about 20°C/min. Thus the temperature window in which a cooling polymer from the melt temperature is able to crystallize in the process of dynamic crystallization is localized to that temperature range between the upper crystallization onset temperature from melt on the high temperature end to the lower boundary crystallization temperature from melt on the lower temperature end.

In the temperature range between the upper crystallization onset temperature from melt and the lower boundary crystallization temperature from melt, there exists a temperature at which the rate of crystallization of the polymer is at a maximum. This temperature is referred to herein as the 《peak crystallization rate temperature from melt 》, also sometimes referred to as the maximum crystallization rate temperature. The peak crystallization temperature from melt is that temperature in a cooling differential scanning calorimetry analysis where the heat flow of the dynamic crystallization reaction is at a minimum. For PET, the peak crystallization rate temperature from melt is generally from about 160°C to about 200°C, at a cooling rate of about 20°C/min. As is also the case for the upper and lower temperature boundaries at which crystallization from melt can occur, the peak crystallization rate temperature from melt is dependent upon the specific polymer, particularly with respect to the chain length and chain substituents. Additionally, each of these temperatures is dependent upon the rate of cooling of the polyester, with faster cooling rates tending to lower each of these characteristic dynamic crystallization temperatures relative to a slower cooling rate. For example, at cooling rates greater than about 90°C/min, the peak rate of crystallization from melt is suppressed and thus the amount of crystallization in the resultant ambient temperature material is lower than that which is attainable with a lower cooling rate. Such a suppression of crystallization is referred to as 《thermal quenching 》 or crystallization.

Although each of the characteristic temperatures associated with dynamic crystallization is variable, each of these temperatures for a given polymer or copolymer may easily ascertained by one skilled in the art, using DSC analysis.

While the polymer is maintained within the temperature window defined by the upper crystallization onset temperature from melt and lower boundary crystallization temperature from melt, crystallization of a polymer continues until all material that will naturally undergo crystallization exists in the crystalline state. Alternatively, if the polymeric material is continually cooled, while the polymer is in the above-defined temperature window conductive to crystallization, it crystallizes to the maximum extent possible for the given rate of cooling and the given polymer.

Thus, in contrast to the conventional glass-to-mold process wherein crystallinity is controlled through the recrystallization reaction upon reheat, control of crystallinity in the process of the present invention is achieved through control of the length of time the polymer is within the above-defined temperature window at which dynamic crystallization occurs during cooling and the temperature at which the crystallization reaction is performed. For example, if the peak crystallization rate temperature is used, a minimum amount of time is required for the crystallization reaction to complete. Sub-optimal dynamic crystallization temperatures require a longer time at temperature for the completion of the dynamic crystallization reaction.

It is considered important in the practice of the invention that the time at temperature within the aforementioned window of dynamic crystallization be sufficiently long that the material has achieved a state of crystallization to which it naturally strives, such that upon reheat, there is little, if any, recrystallization as determined by heating DSC analysis and expressed as the enthalpy of recrystallization, $\Delta Hr$.

Crystallinity as defined herein is measured by differential scanning calorimetry, for exemple with a Perkin Elmer 7 Series Thermal Analysis System, as opposed to the viscosity measurement method that has been commonly used previously by others. It is emphasized that the two techniques for determination of the crystalline content of a polyester are not directly related such that values calculated by one technique can be converted to a value corresponding to that derived from the other technique. This is because the density measurement of crystallinity is dependent upon additives to a polyester composition. Calculations based on such a density measurement will, therefore, not always adequately represent the true crystallinity of a material. By contrast, through use of differential . scanning calorimetry, the behavior of the polyester can be isolated from that of any additives, and thus the degree of crystallinity directly calculated from the DSC thermogram as is exemplified herein and known in the art.

The controlled cooling of the molten material in performing the process of the invention provides for at least two morphological differences between the present polyester and those made by the conventional glass-to-mold process. First, the product produced by the process of the invention contains highly developed crystals at a level of crystallinity that the material naturally seeks under the most favorable conditions for crystal formation. By highly developed crystals, it is meant that the crystals in the material are larger in size, more spherical in shape and are more evenly distributed throughout the material than was heretofore attainable in conventional manufacturing processes. It is thought that these highly developed crystals serve to impede gas flow through the material. Such a high degree of crystal growth also eliminates the need for axial orientation of the polymer for this gas barrier purpose. As a result, the product produced by the process of the invention does not have mechanical stresses embedded therein that are traditionally associated with polyester of low gas permeability.

A second advantage of the controlled cooling in the 《melt-to-mold》 process described herein is that thermal gradients are minimized in the polyester or polyester article produced. As a result, the product produced by the process of the invention additionally has a lower degree of thermal stress memory than many previously available products.

Polyesters suitable as starting material for making a polyester with the improved gas permeability, degree of crystallization and dimensional stability of the materiel produced by the process of the invention are commercially available. For example, polyethylene, terephthalate is available from Eastman Kodak Chemicals as product number 9902 and from Goodyear Tire and Rubber as product number 9506. However, as discussed below, these materials must be heated to above their melting temperature for sufficient time to render them into a completely or substantially completely amorphous, molten state.

Due to the absence of a process step which requires reheating a commercially available polyester to the molten state, it is desirable that the base polyester used in the invention be made from the molten product of the polyester formation reaction. Thus, the polyester product produced by the process of the invention may be made from precursor materials as know in the art. These precursors are generally saturated diols (or other polyols) and unsaturated dibasic acids or their anhydrides. However, it should be recognized that previously made polyester resin, either amorphous or crystalline, can be used as the base polyester in the practice of the invention.

Suitable diols include, for example, ethylene glycol ; propylene glycol ; diethylene glycol ; and 2,2-dimethyl-1,3-propanediol ; 1,4 butane diol ; 1,4 cyclohexane dimethanol ; 2,2,4-trimethyl-1,3-pentane diol ; 2-methyl-2-propyl-1,3-propane diol ; 1,3 butane diol ; 1,5 pentane diol ; 1,6-hexane diol ; 1,8-ocatane diol ; 1,9-nonane diol ; 1,10-decane diol ; 1,12-dodecane diol ; 1,2-cyclohexanedimethanol ; 1,3-cyclohexanedimethanol ; 2,2,4,4-tetramethyl-1,3-cyclobutane diol ; 1,2-xylene diol ; 1,3-xylene diol ; and 1,4-xylene diol. Diols for preparing the product produced by the process of the invention may generally comprise from about 5 parts to about 95 parts of the final polyester. The preferred diols are ethylene glycol, propylene glycol and 1,4-butane diol, with the most preferred being ethylene glycol.

Suitable dibasic acids or acid anhydrides include maleic acid, fumaric acid, terephthalic acid (1,4-benzenedicarboxylic acid), 2-chloroterephthalic acid ; phthalic acid (1,2-benzenedicarboxylic acid) and isophthalic acid (1,3-benzenedicarboxylic acid) ; 2,6-naphthalene dicarboxylic acid ; 2,7-naphthalene dicarboxylic acid ; and 4,4'-biphenyl dicarboxylic acid or combinations thereof. Dibasic acid for preparing the product produced by the process of the invention may comprise from about 95 parts to 5 parts, by weight, of the final polyester. Preferred dibasic acids in the practice of the invention are terephthalic acid and naphthalic acid, with terephthalic acid being most preferred.

Derivatives of these diols and dibasic acids may also be used as starting material for performing the process of the invention. With respect to diols, reference is specifically made to their $C_{1-6}$ substituted derivatives, while with respect to dibasic acids, reference is specifically made to monoalkyl- and dialkyl esters of terephthalic acid, such as the 1-methylester and 1,4-dimethylesters of terephthalic acid.

Other modifiers may also be included in the polyester produced by the process of the invention. When incorporated in the polyester produced by the process of the invention, these modifiers desirably constitute less than 15 % by weight, preferably less than 10 % by weight, each as compared to the total weight of the polyester.

The polyol and dibasic acid starting materials may be reacted either through the direct esterification process (when using the free acid as starting material) or the ester-interchange process (for example, when starting with the metylester derivative of terephthalic acid). The polyesters thereby generated are then exposed to high temperature (e.g., from at least about 240°C, preferably about 280°C) at which point melt polymerization of the material proceeds. The degree of polymerization can be determined through use of torque meters connected to stirrers that are in contact with the polymer melt. As the polymer chain length increases, the viscosity of the melt increases. The reaction is then stopped when the viscosity reaches the desired value as indicated below.

The polyester polymer produced by the process of the present invention may comprise either a homopolymer or copolymer, so long as the material is capable of achieving a crystallinity of at least 10 % as measured by cooling DSC as exemplified below. The polyester produced by the process of the invention may also be a blend of homopolymers, copolymers or heteropolymers as long as the requisite degree of crystallinity is met.

The preferred homopolymers in the practice of the invention are those of polyalkylene terephthalates and polyalkylene naphthalates, inclusing polyethylene terephthalate, polybutylene terephthalate and polyethylene naphthalate. The most preferred homopolymer is polyethylene terephthalate. Suitable copolymers are derived, for example, from about $C_{1-6}$, non-soluble and partially miscible olefins, such as propylene, butylene, ethylene methyl acrylate, ethylene butyl acrylate, methyl butyl styrene, polyethyl adipate, epichlorohydrin, maleic acid, fumaric acid.

Conventional catalysts may also be employed in making the polyester by the process of the invention. Such catalysts, which include transition metal compounds such as antimony acetate, antimony trioxide, titanium alkoxides, stannous alkoxides, and the like, may be used at conventional concentrations.

The polyester produced by the process of the present invention has an intrinsic viscosity of from 0.65 dl/g to 1.1 dl/g as measured at 25°C in a 60:40 by weight mixture of phenol:tetrachloroethane at a concentration of 0.5 g/100 ml. Preferably, the polyester produced by the process of the invention has an intrinsic viscosity of from 0.65 dl/g to 1.0 dl/g, and most preferably the intrinsic viscosity of the polyester produced by the process of the invention is from 0.7 dl/g to 1.0 dl/g, measured as described above.

The polyester produced by the process of the invention may also be employed in a composition to improve the gas barrier and thermal dimensional stability of articles made from the composition; Other ingredients in such a composition include nucleants, impact modifiers, heat stabilizers, mold release agents, and trimming agents. It should be understood that additives are not required in ordre to produce the improved crystallinity, gas permeability and thermal dimensional stability characteristics of the product produced by the process of the invention.

When desired, a composition comprising the polyester produced by the process of the invention may include nucleants. These materials may aid in increasing the number of crystals as well as their rate of formation in the composition of the invention. Examples of suitable nucelants include inorganic heterogeneous nucleants, such as silica, talc, calcium carbonate, gypsun, carbon black, titanium dioxide, mica, powdered glass, finely divided metals, metallic salts such as sodium benzoate, ionomers such as ethylene ionomer, graphite, as well as others as known in the art.

Homogeneous organic nucleants may also be incorporated in the composition produced by the process of the invention. For example, when the polyester is the preferred polyethylene terephthalate, finely divided particles made of low molecular weight (i.e., $M_n$ below about 6500-8500) PET may serve as nucleant. Similarly, with a polybutylene terephthalate base polymer, low molecular weight PBT may be incorporated in the composition to serve as nucleant. The preferred homogeneous organic nucleants are these low molecular weight PET and PBT for their respective base polyesters.

Nucleants may also be of the heterogeneous organic type. For example, low molecular weight polyethylene naphthalate ($M_n$ less than about 6500-8500) be used as nucleant for a polyethylene terephthalate base polymer, or polyethylene terephthalate may be used as nucleant for a polybutylene terephthalate base polymer, and so on. When desired in the practice of the invention, the preferred heterogeneous organic nucleants for use in a composition of the preferred polyethylene terephthalate homopolymer, is methyl butyl styrene, and the $C_{1-6}$ polymers, such as ethylene-propylene copolymer, ethylene-butylene copolymer, ethylene-pentene copolymer, and polymethylpentene.

When included in the composition produced by the process of the invention, nucleants may be added between from about 0.25 % to about 4 % by weight as compared to the total weight of the composition. Preferably, nucleants are used in from about 0.5 % to about 3 % by weight, and most preferably from about 1 % to about 3,5 %, as compared to the total weight of the composition. Nucleants are also generally preferred to have an average particle size from about 2 to about 12 microns in diameter.

Impact modifiers may also be included in the composition produced by the process of the invention. These materials are useful in decreasing the tendency of crystallized polyesters to shatter, particularly at below ambient temperature, for example at a temperature of about -60°C. Impact modifiers are thus most useful in the production of containers for items that are meant to be refrigerated or frozen.

Suitable impact modifiers for use in practicing the invention include polycarbonates, glycol-modified PET, polyarylates, polybutene, polybutylene, methyl butyl styrene, polybutene-polyethylene copolymer, polysulfones, polymethylmethacrylate, polyisobutylene, polyisobutylenepolyethylene copolymer, polymethylmethacrylate-polycarbonate shell-core modifier,
poly($C_{1-6}$)alkylene-($C_{1-6}$)acrylate co-polymers, such as polyethylenemethyl acrylate copolymer, polyethylene-butylacrylate copolymer, having an acrylate comonomer content of from about 5 % to about 60 %, and the like. The preferred impact modifiers are methyl butyl styrene, the polymethylmethacrylate-polycarbonate shell-core modifier and the polyalkylene-acrylate copolymers. Most preferred are poly($C_{1-4}$)alkylene-($C_{1-6}$)acrylate copolymers having an acrylate comonomer content of from about 5 % to about 60 %, particularly, polyethylene methylacrylate copolymer, polyethylene methylacrylate copolymer, polybutylene methyl acrylate copolymer, polypropylene methylacrylate copolymer, and the corresponding ethylacrylate, butylacrylate and propylacrylate polyalkylene copolymers, and mixtures thereof.

When desired, impact modifiers are useful in the composition produced by the process of the invention at from about 0.5 % to about 15 % by weight as compared to the total weight of the composition, preferably from about 1 % to about 10 % by weight, and most preferably from about 3 % to about 10 % by weight, as compared to the total weight of the composition.

Heat stabilizers may also be included in the product produced by the process of the invention. This additive is useful for inhibiting oxidation of the base polyester at elevated temperature and thus is desirable for inclusion in compositions with are designed to be heated, such as ovenable food trays. The use of heat stabilizers is described, for example, in U.S. Pat. Nos. 3,987,004 ; 3,904,578 ; and 3,664,482. Suitable heat stabilizers useful in the product produced by the process of the invention include alkylated substituted phenols, bisphenols, substituted bisphenols, thiobisphenols, polyphenols, polybisacrylates, aromatic amines, organic phosphites and polyphosphites. Of the aromatic amines, reference is made to primary polyamines, diarylamines, bisdiarylamines, alkylated diarylamines, ketone-diarylamine condensation products, aldehyde-diarylamine condensation products and aldehyde imines. Specific reference in regard to polyphenols useful as a heat stabilizer in the product of the invention is made to tetrakis (methylene-(3,5-ditertiarybutyl-4-hydroxyphenyl)-proprionate)methane and 1,3,5-trimethyl-2,4,6-tris(3,5-ditertiarybutyl-4-hydroxybenzyl)benzene. Commercially available heat stabilizers may also generally be suitably employed in the product produced by the process of the invention.

When added to the composition produced by the process of the invention, heat stabilizers are useful from about 0.005 % to about 2 % by weight as compared to the total weight of the composition. These materials are preferably included to between from about 0.05 % to about 2 % by weight, and most preferably to between from about 0.1 % to about 2 % by weight, as compared to the total weight of the composition.

Mold release agents may also be included in the composition produced by the process of the invention. These materials aid in the removal of a shaped article from the shaping surface. Suitable mold release agents include $C_{1-6}$ olefins (copolymer or homopolymer versions) low molecular weight polymers such as polyethylene, and low molecular weight waxes. Zinc stearate is also known as a useful mold release agent. These mold release agents are preferable for inclusion in the composition produced by the process of the invention as they additionally serve as trimming agents which facilitate the trimming of excess material from a shaped article of the invention.

Mold release agents are suitably included in the composition produced by the process of the invention as is usual in the art, generally at from about 0.25 % to about 4 % by weight, as compared to total weight of the composition.

Colorants may also be added to the composition produced by the process of the invention. In addition to potential nucleating agent carbon black and titanium dioxide, reference is also made to non-nucleating colorants such as phthalocyanine blue, solvent red 135, and disperse yellow 64. To determine if a particular colorant is also a nucleating agent, comparison is made of DSC thermograms as to the crystallization onset temperature from melt, peak crystallization rate temperature from melt and total enthalpy of crystallization of the polyester with and without the colorant. These values are essentially unchanged by the presence of a non-nucleating colorant. The amount of colorant required for a particular color is easily determined by those in the art.

As is evident from the foregoing, in some cases an additive to the composition produced by the process of the invention performs more than one function in the final product. For example, low molecular weight olefins may act as an impact modifier, a mold release agent, a trimming agent, or a carrier for colorants, stabilizers, and the like. As another example, carbon black may act as both a pigment and a nucleant. Impact modifiers may also act as nucleants, mold releases, trimming agents in the present process. Thus, depending upon the final end use of the composition produced by the process of the invention, different additives will be preferred as is known in the art.

The polyester product produced by the process of the invention is defined first in that the degree of crystallinity is between from about 10 % to about 60 %, preferably from about 15 % to about 40 %, more preferably from about 20 % to about 40 % and most preferably from about 25 % to about 40 %, as measured by DSC analysis.

The product produced by the process of the invention is also characterized by improved thermal dimensional stability, in that upon heating from about -60°C to about 200°C, there is less than about 6 % shrinkage in any linear dimension, preferably less than about 5 %, more preferably less than about 4 %, yet more preferably less than about 3 %. Still even more preferably, the dimensional stability of the product produced by the process of the invention upon heating from about -60°C to about 200°C is less than about 2 %, and most preferably less than 1 % in any linear dimension.

The product produced by the process of the invention further provides for a gas barrier as characterized by an oxygen permeability of from about 0.2 to about 4.9 cc-mil/100 $in^2$ (650 $cm^2$)-24 hr-atm, at 23°C and at 60 % relative humidity outside/100 % relative humidity inside. The oxygen permeability of the product produced by the process of the invention may also be from about 0.2 to about 4 cc-mil/100 in$^2$ (650 cm$^2$)-24 hrs-atm, from about 0.2 to about 3 cc-mil/100 in$^2$ (650 cm$^2$)-24 hrs-atm, from about 0.2 to about 2 cc-mil/100 in$^2$ (650 cm$^2$)-24 hr-atm, preferably from about 0.2 to about 1 cc-mil/100 in$^2$ (650 cm$^2$)-24 hr-atm, an most preferably from about 0.2 to about 0,8 cc-mil/100 in$^2$ (650 cm$^2$)-24 hr-atm, each at 23°C with 60 % relative humidity outside and 100 % relative humidity inside.

The product produced by the process of the invention is still further characterized by an enthalpy of recrystallization, ΔHr, between about 100°C and 170°C, as determined by heating differential scanning calorimetry, of from about 0 to about -2.1 cal/g at a heating rate of about 20°C/min. The product may also have an enthalpy of recrystallization of from about 0 to about -1.5 cal/g, from about 0 to about -1.0 cal/g, from about 0 to about -0.5 cal/g, and about 0 cal/g, as determined by heating DSC in the temperature range of from about 100°C to about 170°C and at a heating rate of about 20°C/min.

In making the product produced by the process of the invention, a base polyester is first heated at about 350°F (176,7°C) for greater than about 6 hours in a desiccating oven to lower the moisture content of the material to less than about 110 ppm, preferably to less than about 50 ppm. Certain additives, such as a polyethylene mold release agent may also require heating to lower the moisture content as is known in the art.

In one embodiment of the process of the invention, the base polyester is that resulting from the formation reaction of the polyester. In a second embodiment, the base polyester may have been preformed and cooled to below the Tg of the material, and then later reheated as described above. It should be appreciated that in this second embodiment, the process is discontinous, and the time at which the base polyester has been stored at a temperature below the Tg may be from seconds to years. Additionally, the base material in such a discontinuous process may itself have been the result of the process of the invention. Additionally, pre-formed amorphous or crystalline polyester made by the conventional glass-to-mold process may be used as base polyester in such a discontinuous process of the invention.

Next, the polyester base material and any desired additives are mixed together, preferably in a mixing screw of an extruder, and heated to at or above the melting temperature of the polymer for a time sufficient to provide for a completely amorphous or substantially (i.e. greater than 99 weight %) completely amorphous molten polyester. In the case of the preferred polyethylene terephthalate, the temperature is preferably brought to between from about 500°F (260°C) to about 580°F (304,4°C), most preferably from about 510°F (265,5°C) to about 550°F (287,8°C). Particularly if the polyester source material has a prior thermal history, it is important that the composition be kept at this higher temperature for a sufficient time to achieve the desired substantially molten state. The particular length of time will vary according to the precise polyester of the composition as well as to the amount, if any, of material that has had a previous thermal history. Such time may be determined by DSC analysis of any recrystallization and the melting profile of the material and the process time parameters adjusted appropriately.

Depending on the need for mixing and reaction of components (e.g., additives) and the previous thermal history of the material, it is possible to only heat the material to a temperature at which dynamic crystallization of the polymer is initiated. Although such an embodiment of the invention results in improved properties of the material relative to conventional processes, it is not the generally preferred method since the morphology of the polymer resin produced by this embodiment in not as uniform as when the base resin is molten. Additionally, the properties of the material made in this embodiment of the invention are not improved as significantly as when the polyester is heated until a completely or substantially completely amorphous molten state has been archieved.

In contrast to conventional processes for producing polyesters and articles made of this material, after formation of an amorphous or substantially amorphous molten polyester of correct viscosity, the polyester material is contacted to a surface capable of imparting a shape on the composition, such as a laminating table, or a surface of a mold cavity. The polyester material may be contacted with the surface by any of the known techniques, such as extrusion molding or injection blow molding.

U.S. Pat. No. 4,061,706 and U.S. patent application No. 165,370, now allowed, both describe an apparatus suitable for imparting shape on the polyester of the invention so as to make a thermoformed article. However, any material capable of withstanding the temperatures used in the process of the invention without substantial distortion may be used as the surface capable of imparting shape on the polyester or composition produced by the process of the invention. Additionally, the material of which the surface is made must not chemically react with the polyester or any components of the composition of the invention. The preferred surface is made of metals or metal alloys, as these materials are reusable and thus highly economical, relatively chemically inert with respect to the components of the composition of the invention, provide high rates of heat transfer, readily controllable temperature, and a uniform temperature throughout. The preferred material for the shaping surface in the process of the invention is aluminum.

The temperature of the polyester on the surface capable of imparting shape in the process of the invention is within the range of temperature wherein crystallization occurs in the polyester (i.e., from between at or above the lower crystallization onset temperature to at the higher crystallization onset temperature). Preferably, the polyester is at or near the peak crystallization rate temperature for the polyester material, and most preferably, the temperature of the polyester is at the peak crystallization rate temperature. The materiel is then kept at this temperature for a time sufficient to induce a material with the desired dimensional stability, gas permeability and low enthalpy of recrystallization.

It emphasized that the produce the product according to the invention, the time at temperature also determines the degree of crystallinity in the final polymer product. Thus, at temperatures below the peak crystallization rate temperature, longer residence times of the polymer on the molding surface would be required in the process of the invention, than would be were the material at the peak crystallization rate temperature. Thus, when speed of production is desired in making the product produced by the process of the invention, it is most preferred that the polyester material is contacted with a surface at the peak crystallization rate temperature. However, if longer residence times are allowable, virtually the same material can be produced at non-optimal crystallization rate temperatures (i.e., elsewhere within the temperature window within which dynamic crystallization can occur). It should be generally understood that the longer the time the polyester is in the window wherein dynamic crystallization can occur, the better. This is because long residence times at the correct temperature ensures that the materiel has reached the level of crystallinity it naturally tends to and thus minimizes any recrystallization upon heating.

In the process of the invention using the preferred polyethylene terephthalate homopolymer, the time of contact between the polyester or composition and the molding surface may be from about 20 seconds to about 5 minutes, between 20 seconds and about 4 minutes, between 20 seconds and about 3 minutes, between about 20 seconds and about 2 minutes, preferably between about 20 seconds and about 1 minute, and most preferably between about 20 seconds and about 40 seconds.

Next in the process of the invention, the polyester material contacted to the surface is cooled at a rate of from between 5°C to 80°C per minute, preferably from between 10°C and 50°C per minute and most preferably between from 15°C and 25°C per minute. The rate of cooling of the product produced by the process of the invention is deemed important in that what is meant to be avoided is the thermal quenching of the crystallization process. This is in contrast to the conventional processing of polyester resins, wherein thermal quenching of crystallization is desired. After sufficient cooling of the polyester, preferably to below the lower boundary crystallization temperature, and most preferably below the Tg of the polyester, the product produced by the process of the invention may then be removed from contact with the heated surface and cooled to ambient temperature. This final cooling to ambient temperature is most conveniently achieved by radiative cooling in air.

As a result of the melt-to-mold thermoforming process of the invention, the crystals in the polyester so formed are highly developed, uniform in size and can be preferentially developed in three dimensions. Again, in contrast to conventional processes, wherein the crystals are in a large range of sizes and, in general, smaller than those of the present material and preferentially develop in primarily two dimensions. As a further result of the dynamic crystallization process, articles formed by the process of the invention are substantially homogeneous throughout with respect to their morphology.

In many applications of the invention, for example dual ovenable food containers, it is desired that the cooling of the polyester or composition produced by the process of the invention be at a uniform rate, and controlled such that the cooling process is isothermal or substantially isothermal with respect to the product. Cooling in this way minimizes the formation of internal stresses in the polymer structure, and thus minimizes the amount of stress release upon heating, as well as post-mold shrinkage. By isothermally as used herein, it is meant that the temperature of the polyester or composition produced by the process of the invention be essentially the same throughout, such that thermal gradients are not formed in the material or are kept to a minimum. By substantially isothermally, it meant that any deviation from isothermal cooling is minimal such that the desired thermal dimensional stability of the product of the invention results in deformation of the product upon heating from about -60°C to about 200°C that does not exceed about 6 %, preferably not exceeding about 5 %, more preferably not exceeding 4 %, and yet more preferably not exceeding 3 %, still more preferably not exceeding 2 %, and most preferably less than 1 %.

In other applications of the invention, the cooling process may be desired to be at different rates for different parts of the polyester or composition. In this way, different regions of the shaped article of the invention may have different degrees of crystallinity, with the resulting differences in properties, such as impact resistance. Thus, for example, a bottle made of the polyester or composition produced by the process of the invention may have a higher crystallinity and resistance to thermal deformation at the part comprising the mouth of the bottle, than does the body of the bottle. Such an application may be preferable, for example, in an automated hot-fill process wherein a cap is applied to the bottle shortly after filling.

In one embodiment of the invention, the polyester resin is formed into particles, pellets, sheets, or other forms suitable for storage, transport, etc. as known in the art and used at a later time to form a thermoshaped article. In such a discontinuous process, the polyester material is preferably stored a ambient temperature. Additionally, storage of the polyester of this embodiment of the invention may be from minutes to weeks to years, being generally stored until thermoforming is desired.

In yet another embodiment of the invention, after the completion of the dynamic crystallization reaction, the polyester may be cooled to a temperature between ambient and the Tg of the material, then reheated to generally above the Tg and thermoshaped.

Such variations in embodiments of the invention exemplified above, in which the process is discontinuous (i.e., requiring a second heeting step), should not be regarded as a limitation on the invention of the claims appended hereto. Rather, recitation of all such processes is believed to be cumulative, and such variations in the process of the invention are within the skill of the art. Thus, the attached claims are meant to encompass all such obvious variations in the process of the invention.

In another embodiment, the polyester is cooled after the completion of dynamic crystallization, though not to ambient temperature, by to a temperature at which molding can be achieved. Generally in this embodiment of the invention, the polyester will be cooled to a temperature that is above the Tg of the material. However, in such a process of the invention, the material should be molded at temperatures which will not substantially affect the crystallization and morphology of the resin in order not to affect the improved gas permeability and/or dimensional stability of the final molded product. Any temperature to be avoided will depend upon the resin, but can be conveniently determined by DSC analysis of the material as exemplified herein.

The polyester produced by the process of the invention and article produced by the process of the invention have many useful advantages over polyester material heretofore available. Chief among these are dimensional stability at elevated temperature, low gas permeability, low degree of recrystallization upon heating as characterized by the $\Delta Hr$, each as described above, that the polyester produced by the process of the invention imparts on the article of manufacture. For example, when used as a container for food products, the material produced by the process of the instant invention is microwavable (is penetrable by radiation in the microwave range and does not heat excessively upon exposure to power levels of this radiation typically used in conventional microwave ovens). The material produced by the process of the invention is also ovenable to temperature of up to about 215°C, with less than 6 % change, preferably less than 5 % change, more preferably less than 4 % change, still more preferably less than 3 % change, even more preferably less than 2 % change, and most preferably less than 1 % change in linear dimensional shrinkage in any given dimension. Containers made of the materiel produced by the process of the invention also increase the shelf life of products stored either under pressure or under vacuum, since the gas permeability of the present material is lower than that previously available. Containers made of the material produced by the process of the invention also provide for better taste and texture of the food contained therein, since the product produced by the process of the invention can withstand higher temperatures without warping, breaking of seals, or other product failure, thereby allowing for reduced time at retort temperature than is required when using previous products. For example, the product produced by the process of the invention can withstand retort at from about 280°F (137,8°C) to about 350°F (176,7°C), which is higher than the retort temperature conventionally uised (about 265°F (129,4°C)). Accordingly, the length of time of retort at temperature may be substantially reduced with the result that the time a foodstuff must be exposed to the retort temperature will also be reduced.

Furthermore the product produced by the process of the invention has the additional advantage that it possesses a multi-use dimensional stability as it withstands multiple heat histories, for example temperature sterilization followed later by microwave or conventional oven heating. As another example, the product produced by the process of the invention can withstand multiple sterilization processes, for example retort, or multiple reconstitution processes or a combination of the two due to its greatly improved dimensional stability.

Another advantage of the invention is that since the resin is in the molten state at the beginning of the molding process, the detail of the mold is more readily imparted on the shaped article. This is in contrast to lower temperature molding techniques where not all fine detail is imparted into the shape of the final product. Thus the invention provides for a process for the production of polyester articles that have more intricate design, thereby allowing for more distinguishing marking between similar products.

A further useful advantage of the product produced by the process of the invention is that the material is recyclable by the methanolysis process of recycling polyesters. Thus, in addition to the cost savings afforded by recyclable products, the product produced by the process of the invention is environmentally sound.

The manufacture of a myriad of articles are possible and useful in the practice of the process of the invention. Generally, any article that is currently made of polyester material is suitable to be made of the material of the invention. Preferred uses are to those articles that take special advantage of the gas permeability and thermal dimensional stability of the polyester of the invention.

By way of example and not by way of limitation, the following articles are given to indicate suitable articles manufactured under the practice of the invention : microwavable and ovenable food containers, including trays, boxes, pouches, bags, and the like ; microwavable and ovenable liquid containers, for example for beverages, such as juices, milks, coffees, teas, water, carbonated drinks, and the like; packaging for materials that require sterilization by chemical, radiation, temperature, pressure or other means, such as pasteurization, autoclaving, peroxide treatment, oxide treatment, gamma radiation and the like, including medical supplies, pharmaceutical containers, chemical containers, food containers, and sundry items ; and medical devices for which low gas permeability is an advantageous characteristic. Additionally, articles produced by the process of the invention, again for example food containers, are also advantageously used at below ambient temperatures. For example, food containers produced by the process of the invention are useful in frozen food applications, to temperatures at least to about -60°C, as a result of the improved dimensional stability of the product of the invention.

As polyesters can be molden into an infinite number of shapes, the details of the shape of the surface are dependent only upon the choice of the article to be made. Thus, for example, in the manufacture of a food container, the surface in the process of the invention is one which imparts to the polyester composition the shape of a tray. Furthermore, details as to the article are also end use dependent. For example, whether a food container is to have one or multiple spaces capable of independently holding food. Products, such as food trays and similar containers are preferably made by a extrusion molding process in the practice of the invention.

Another article produced by the process of the invention for which the polyester composition is useful is a bottle. Since the polyester provides a superior gas barrier to other currently available materials, a bottle made of the polyester produced by the process of the invention is particularly useful for use with beverages, for example carbonated beverages, where the contents are under pressure. On the other hand, containers for holding items under vacuum are also provided by the present invention, again due to the superior gas permeability characteristics of the polyester polymer. Containers of this type are preferably made by a blow molding process in the practice of the invention. The product produced by the process of the invention may, but need not, be of uniform thickness as is desired by the end user.

The following examples are put forth in order to assist those skilled in the art in the practice of the invention by way of illustration, and not meant to be construed as a limitation. Additional background material that may be of help to some practitioners may also be found in the patents referred to herein, each of which are hereby incorporated by reference.

Examples

The following oxygen transmission experiments were performed by Alcoa Laboratories 《《Oxtran 》》 testing, at 23°C and 60 % relative humidity outside/100 relative humidity inside.

Example 1.

Melt-to-mold preparation of CPET polyester and DSC analysis.

About 1000 pounds (453,6 kg) of a 50/50 regrind blend consisting of a 0.95 i.v. polyethylene terephthalate homopolymer was pre-dried at about 330°F (165,6°C) for greater than 6 hours in a desiccant dryer to less than 50 ppm water. Approximately 50 pounds (22,7 kg) of a shell-core impact modifier was also predried at about 210°F (98,9°C) for about 2.5 hrs in the same manner. To the impact modified polymer mix was added about 2.5 pounds (1,1 kg) of a linear low density polyethylene mold release agent, having a melt flow index of 0.9 and this mixture was added to the dried polyester in a Welex extruder using a standard polyester mixing screw (Davis Standard Co.). The material was directed through a melt pump to dampen pressure fluctuations, while being kept at a temperature between about 510°F (265,5°C) to about 550°F (287,5°C), and was then extruded in reverse profile with uniform melt temperature as a two dimensional sheet. The polyester sheet was then transferred into a conventional flexible lip-modified coat hanger die (EDI Co.) with the mold temperature set at about 365°F (185°C). The composition resided in the mold for about 40 sec. after which the molded polyester sheet was removed from the mold and allowed to further cool to ambient temperature. The average thickness of the polyester sheet was about 20 mils.

Figure 1 depicts a differential scanning calorimetry (DSC) analysis of 6.200 mg of the CPET material made as described herein. The analysis was performed on a Perkin Elmer 7 Series Thermal Analysis System, as per the manufacturer's recommendations. The curve in Figure 1 depicts DSC analysis of heating the material from about 90°C to about 270°C at a rate of 25°C/min. No exothermic recrystallization reaction is seen in the region between 90°C and the of melting of the material (about 251°C). The degree of crystallinity as calculated by the endothermic reaction between 182°C and 265°C of the material is determined from the calorimetric analysis to be about 29 % using the equation :

$$\% \; C = (\Delta H_T \times 3.434) - 0.2804$$

where $\Delta H_T = \Delta H_r + \Delta H_P$ in calories per gram, and where $\Delta H_r$ is the enthalpy of recrystallization (taken as 0 in the calculation for the material in this Example) and $\Delta H_P$ is the enthalpy of melting (35.757 J/g in this Example), both as determined from the DSC thermogram, and % C is the percent crystallinity of the material.

The foregoing analysis indicates that virtually all of the possible crystallizable material available at a cooling rate of 20°C/min has been crystallized, and that no recrystallization is detectable in this material using DSC. Thus, on heating the above material, there occurs little or no dimensional shrinkage in the polyester product due to recrystallization.

Samples made by the above process were tested as to their gas permeability as reflected in oxygen transmission rate analysis. The testing was done in a 10 cell 《《Oxtran 》》 (Modern Controls, Minneapolis, MN), and performed by Alcoa Labs using standard package testing techniques. Test were performed at 23°C and 60 % outside relative humidity/100 % inside relative humidity. Transfer analysis was after 5 and 21 days, with these figures extrapolated to yearly transmission rates. The mean transmission rate of seven tests were then used to calculate the oxygen permeability.

Table 1 shows the results of the transmission tests using samples with 25 in$^2$ (162 cm$^2$) surface area and 20 mil average thickness.

TABLE 1

| Sample | 5 day (cc/pkg) | | 21 day (cc/pkg) | |
|---|---|---|---|---|
| | day | year | day | year |
| 1 | 0.0119 | 4.344 | 0.0120 | 4.380 |
| 2 | 0.0119 | 4.344 | 0.0120 | 4.380 |
| 3 | 0.0113 | 4.125 | 0.0113 | 4.125 |
| 4 | 0.0121 | 4.417 | 0.0121 | 4.127 |
| 5 | 0.0120 | 4.380 | 0.0121 | 4.417 |
| 6 | 0.0117 | 4.271 | 0.0118 | 4.307 |
| 7 | 0.0109 | 3.979 | 0.0110 | 4.015 |

The oxygen permeability of this material based on either the 5 day tests or the 21 day tests was 0.94 cc-mil/100 in$^2$ (650 cm$^2$)-24 hr-atm.

Example 2.

A polyester composition was made essentially as described in Example 1, with the exception that the final molded sheet was of an average thickness of about 15 mil. Gas permeation tests were then performed on this material as in Example 1, with the results given in Table 2.

TABLE 2

| Sample | 5 day (cc/pkg) | | 21 day (cc/pkg) | |
|---|---|---|---|---|
| | day | year | day | year |
| 1 | 0.0086 | 3.139 | 0.0088 | 3.212 |
| 2 | 0.0083 | 3.011 | 0.0082 | 2.993 |
| 3 | 0.0093 | 3.376 | 0.0092 | 3.358 |
| 4 | 0.0090 | 3.285 | 0.0089 | 3.249 |
| 5 | 0.0080 | 2.920 | 0.0081 | 2.951 |
| 6 | 0.0072 | 2.630 | 0.0075 | 2.738 |
| 7 | 0.0089 | 3.249 | 0.0085 | 3.103 |

The oxygen permeability based on the five day tests was calculated to be 0.81 cc-mil/100 in$^2$ (650 cm$^2$)-24 hr-atm while the 21 day tests yielded a permeability of 0.79 cc-mil/100 in$^2$ (650 cm$^2$)-24 hr-atm. A Goodyear Tire and Rubber Co. manual gives the oxygen permeability of standard Cleartuf$^R$ at 25°C and 0 % relative humidity as 10 cm$^3$-mil/100 in$^2$ (650 cm$^2$)-day-atm for unoriented material and as 5 cm$^3$-mil/100 in$^2$ (650 cm$^2$)-day-atm for oriented material. These tests were based on ASTM Test Method D-1434.

Example 3.

The procedure essentially as set forth in Example 1 was repeated using a 0.80 i.v. virgin polyethylene terephthalate homopolymer in place of the 50/50 rgrind, and 5 % by weight, based upon the total weight of the composition, of the shell-core impact modifier as in Example 1. No mold release agent was incorporated into this mix. The polyester and impact modifier were both dried heated and molded as in Example 1. The average thickness of the final polyester sheet was 32 mil. A 3.3 mg sample of the polyester was then analyzed by differential scanning calorimetry.

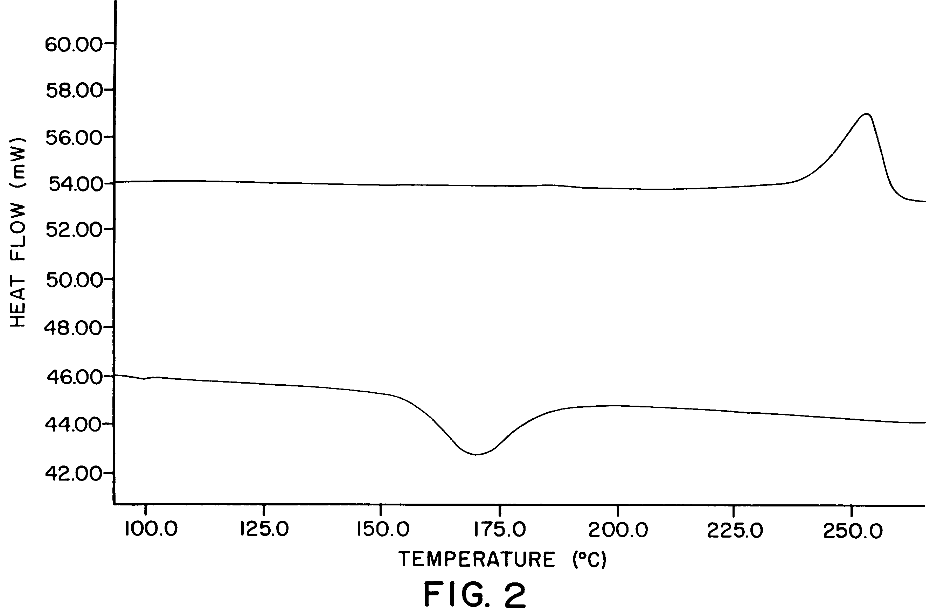

Figure 2 depicts the results of the DSC analysis on 3.3 mg of this material. The upper curve shows no detectable recrystallization at temperatures below the melting temperature of the product upon heating at a rate of 20°C/min. The melting endotherm between 214°C and 265°C corresponds to a $\Delta H_P$ of 42.554 J/g, indicating that the product had a crystallinity of about 34.9 % as calculated in Example 1.

The lower cooling curve exotherm between 205°C and 119°C indicated that at a cooling rate of 20°C/min the polyester material has a maximum crystallinity of about 36 % ($\Delta H_T$ = -44.974 J/g). In this, and other cooling DSC thermograms $\Delta H_T$ is the total enthalpy of the dynamic crystallization reaction, such that the percent crystallinity, % C is calculated from the equation :

$$\% \ C = (\Delta H_T \times 3.434) - 0.2804$$

where $\Delta H_T$ corresponds to the enthalpy of dynamic crystallization in cal/gram.

As seen in the lower curve the upper crystallization onset temperature from melt of this material is about 185°C, the peak crystallization rate temperature from melt is about 170°C and the lower boundary crystallization temperature is about 155°C, at this cooling rate.

The results obtained with this material again show that as determined by DSC analysis there is no detectable recrystallization, and thus little if any dimensionel shrinkage due to recrystallization of the product upon heating.

Example 4.

The process of Example 3 was essentially repeated, with the exception that the polyester composition also contained 2.5 % by weight, as compared to the weight of the homopolymer, the impact modifier as used in Example 1.

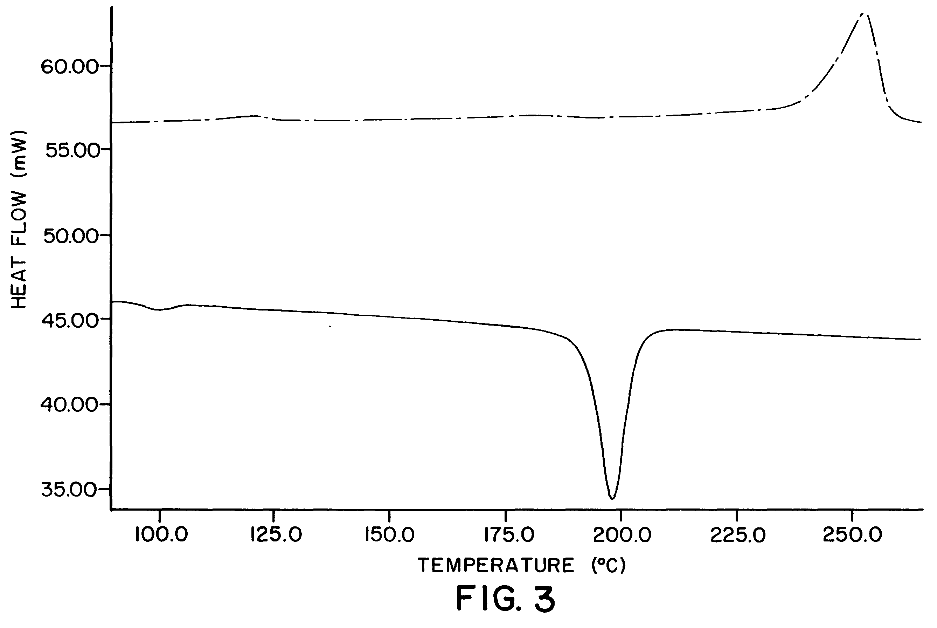

Figure 3 depicts the DSC thermograms of 6.700 mg the product produced in this Example. The upper curve represents the DSC analysis of heating the polyester from about 90°C to about 300°C, at a rate of 20°C/min. Melting of the material was complete at about 270°C. As in the previous Examples, there is no detectable recrystallization of the polyester material during the heating process. The melting endotherm between 162°C and 274°C yields an enthalpy of melting, $\Delta H_P$ of 40.339 J/G indicating that this material has a crystallinity of about 33 %.

The lower curve in Figure 3 is the DSC thermogram obtained by cooling the sample heated above to about 90°C at a rate of 20°C/min. As determined from the crystallization exotherm, the crystallization onset temperature from melt is shown to be about 204°C, the peak crystallization rate temperature is about 198°C and the lower boundary temperature of crystallization from melt is about 188°C. By this dynamic crystallization, the polyester was calculated to have a maximum crystallinity of about 36 % at this cooling rate as determined by DSC. Taken together, the results in this Example indicate that the polyester material formed in the shaping process above contained about 97 % of the amount of crystallizable material obtainable at this cooling rate.

Example 5.

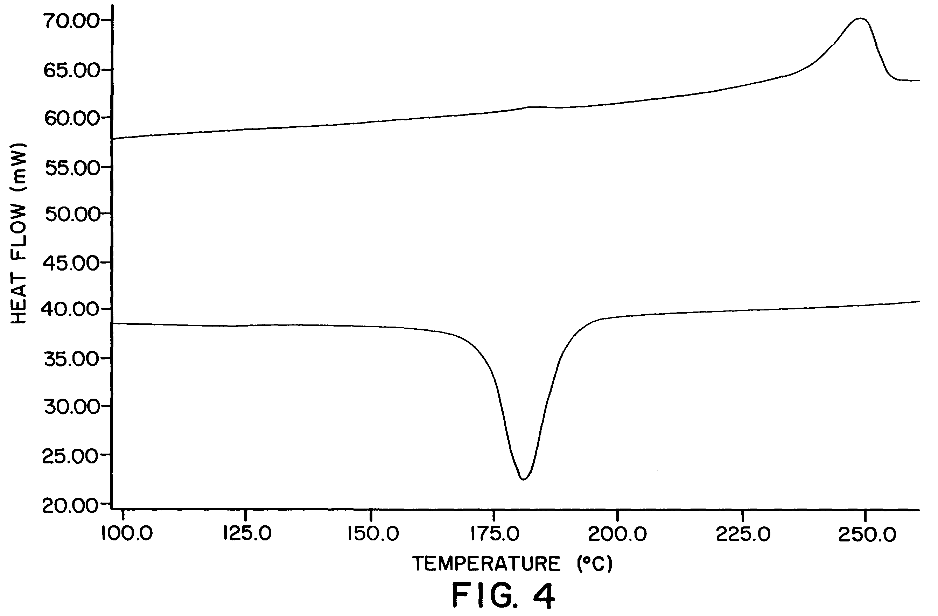

The process essentially as described in Example 1 was repeated with the exception that no mold release agent was included in the polyester composition. 9.4 mg of this material was analyzed by DSC, with the resulting thermogram depicted in Figure 4. Upon heating the sample from about 90°C to about 300°C at a rate of 20°C/min, no recrystallization exotherm was detected (upper curve). Upon cooling this material from about 300°C to about 50°C at a rate of 40°C/min, a dynamic crystallization was obtained as indicated by the crystallization exotherm. As determined from the dynamic crystallization exotherm, the crystallization onset temperature from melt was about 190°C, the peak crystallization rate temperature from melt was about 181°C, and the lower boundary temperature of crystallization from melt was about 165°C. The exotherm corresponds to a crystallinity of about 26 % in this cooled sample. The material produced in the shaping process above has a crystallinity of about 98 % that obtainable at a cooling rate of 40°C/min.

Example 6.

The following twelve polyethylene terephthalate compositions were formulated, with the numbers given being the weight percent of each component, respectfully:

| SAMPLE | 0.95 iv. PET | SEHLL-CORE MODIFIER | A | B | OTHER |
|---|---|---|---|---|---|
| CTRL | 97 | - | - | - | 3 MRA |
| T2 | 87.7 | 9 | - | - | 3.3 Ebony 125 |
| T3a | 95 | - | 5 | - | |
| T3b | 95 | - | - | 5 | |
| T3c | 90 | - | 10 | - | |
| T3d | 90 | - | - | 10 | |
| T4a | 90 | 5 | 5 | - | |
| T4b | 90 | 5 | - | 5 | |
| T4c | 92.5 | 2.5 | 5 | - | |
| T4d | 92.5 | 2.5 | - | 5 | |
| T4e | 85 | 5 | 10 | - | |
| T4f | 85 | 5 | - | 10 | |

A = polyethylene-methylacrylate impact modoifier having approximately 20 % acrylate co-monomer by weight, and melt flow of about 0.5 g/10 min. as measured by the ASTM D1238 method.
B = same as A except a melt flow of about 2 g/10 min. as measured by the ASTM D1238 method.
MRA = linear low density mold release agent.

Each resin was prepared essentially as in Example 3 and formed into a sheet having a thickness of about 20 mils and a crystallinity of about 29 %. The treatment of each resin was equivalent, such that the variations in manufacture of each sheet minimized between the samples and the values obtained thereby normalized.

The impact strength of each sample was then tested at about 23°C, 0°C, -20°C and -40°C on a Dynatup$^{®}$ Autoloader instrumented impact tester (Pittsburg, PA), following ASTM 3763-86. The results of these tests are represented graphically in Figures 12 to 15.

Figure 12 depicts the energy to maximum load (ft-lbs) of each of the samples at room temperature (black), -20°C (dotted) and -40°C (cross-hatched).

Figure 13 graphically depicts the total energy (ft-lbs) at maximum load at ambient temperature (black), -20°C (dotted)and -40°C (cross-hatched).

Figure 14 graphically depicts the results the total energy (ft-lbs) at maximum load (black), minimum load (cross-hatched) and the average (dotted) of the control and samples T2 and T3c at room temperature (Figure 14a) and at -20°C (figure 14c).

Figure 15 graphically depicts the maximum (black), minimum (cross-hatched) and average (dotted) measured energy to maximum load (ft-lbs) for the control, T2 and T3c samples at ambient temperature (Figure 15a) and at -20°C (Figure 15b).

As is evidenced in Figures 12 to 15, inclusion of either the shell-core modifier and/or the polyalkylene-acrylate compolymer in the polyethylene terephthalate significantly increases the impact resistance of the resin, particularly at temperatures below ambient. Additionally, it can be seen that the polyalkylene-acrylate copolymer alone significantly enhances the impact strength of the resin over that without the inclusion of this additive.

Example 7.

In an illustrative example of the invention, the process essentially as described is performed using only virgin 0.80 i.v. polyethylene terephthalate, without any additional additives. The product has an undetectable or negligible enthalpy of recrystallization at a heating rate of 25°C/min in DSC analysis.

Example 8.

In another illustrative example of the invention, sheets, rolls, or pellets, etc. of under crystallized polyester are obtained from a resin supplier and heated to form a molten, substantially amorphous resin. This resin is then processed, with or without inclusion of additives, with the controlled cooling and time of dynamic crystallization essentially as exemplified in the Examples above. The material has improved gas barrier and dimensional stability characteristics as compared to the polyester used as base material.

Example 9.

In another illustrative process of the invention, a polyester resin is formed, mixed with additives if desired, and rapidly cooled to a temperature below the lower boundary crystallization temperature, for example to about the Tg of the material, to result in thermal quenching of the crystallization reaction. This material is then reheated to produce a melt of substantially amorphous polyester and processed with controlled cooling and time of dynamic crystallization as exemplified above, to produce a polyester with improved gas permeability and dimensioned stability.

Example 10.

In another illustrative process of the invention, a polyester resin is made using the controlled cooling and optimal time of dynamic crystallization as exemplified above, such that maximal crystal growth has been achieved. Such time parameters are determined by DSC analysis of any recrystallization of material made. The polyester resin, or composition, is then cooled to a temperature suitable for molding and an article is directly molded by conventional molding techniques. The article thereby obtained has improved gas barrier and dimensional stability properties as compared to a polyester made by the conventional glass-to-mold process.

Example 11.

A polyester resin is made essentially according to Examples 1 or 3, with or without additives, such as colorants, nucleants, impact modifiers and mold release agents, and cooled to ambient temperature for storage and/or shipment. This material is then later heated to a suitable molding temperature and molded into a food container, for example, a food tray or carbonate beverage bottle. The food container so produced sterilizable by heat, chemical and/or irradiation, and is both microwaveable and ovenable at high temperature, showing less than 6 % shrinkage upon heating. Such a process is illustrative of one embodiment of a discontinuous process of the invention wherein a second heating and cooling step are employed for the molding process.

Comparative Example 1.

The process as essentially described in Example 1 was repeated using a 0.95 i.v. polyethylene terephthalate homopolymer (Goodyear Tire and Rubber product no. 9506), 2.5 % by weight linear low density polyethylene (NA1), but no impact modifier. However, instead of controlled cooling in the mold, the material of this Example was quick-cooled at about 100°C/min to thermally suppress dynamic crystallization of the polyester during the cooling process and thereby create a sheet of polyester with a very low crystallinity.

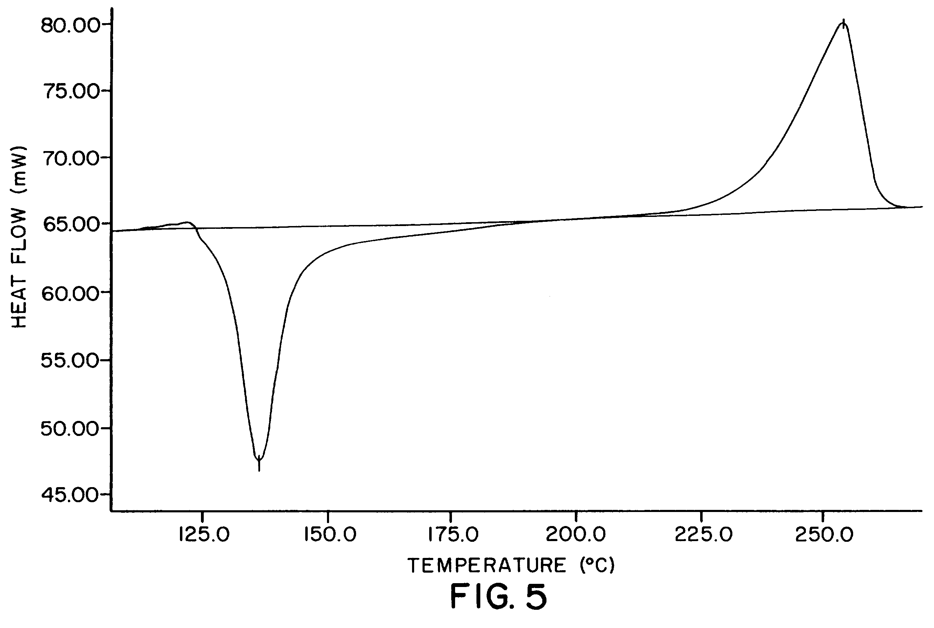

20.6 mg of this material was then analyzed by DSC, with the results of the heating DSC depicted in Figure 5. The material was heated from about 50°C to about 300°C at a rate of 20°C/min. As can be seen by the large recrystallization exotherm located between about 125°C and about 190°C, this material was highly amorphous at ambient temperature, as expected due to the thermal quenching of dynamic crystallization of the material during the prior cooling process. The total crystallinity of the material as calculated as the sum of the $\Delta H$ of recrystallization and the $\Delta H$ of melting indicated that the ambient material had a crystallinity of about 1.8 %.

Due to the large degree of recrystallization upon heating of this highly amorphous polyester, this material has a low dimensional stability resulting from recrystallization. As calculated from the recrystallization exotherm in Figure 5, recrystallization accounted for an increase in crystallinity of this material (amorphous PET) to over about 27 % during the heating process, which would suggest a substantial deformation of the material upon heating.

Comparative Example 2.

The process essentially as described in Example 1 was repeated with the polyester being Goodyear Tire & Rubber 0.95 i.v. PET homopolymer (9506) with NA1 added to 2.5 % by weight based on the total weight of the composition, with the exception that the material was cooled in contact with the mold for only 16 seconds, a suboptimal time at temperature for the dynamic crystallization of this material.

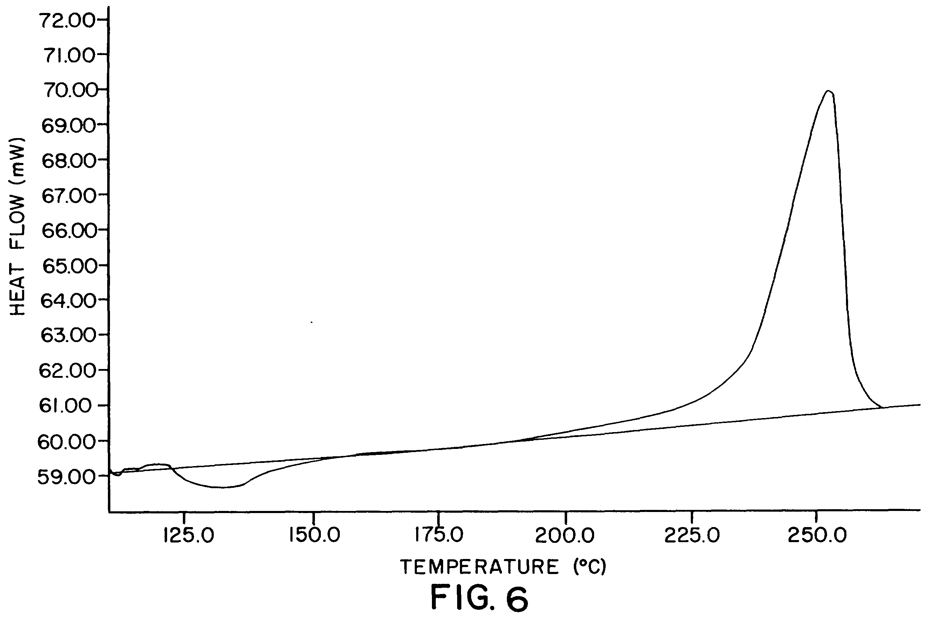

Figure 6 depicts a DSC thermogram upon heating 11.6 mg of the polyester of this Example from about 50°C about 300°C, at a rate of 20°C/min. An exothermic recrystallization is detected between about 125°C and about 175°C, indicating that this material would exhibit excessive shrinkage at these elevated temperatures due to the recrystallization process. The total crystallinity of this material is calculated from the DSC to be about 26 % of which greater than about 9 % is due to recrystallization upon heating.

Comparative Example 3.

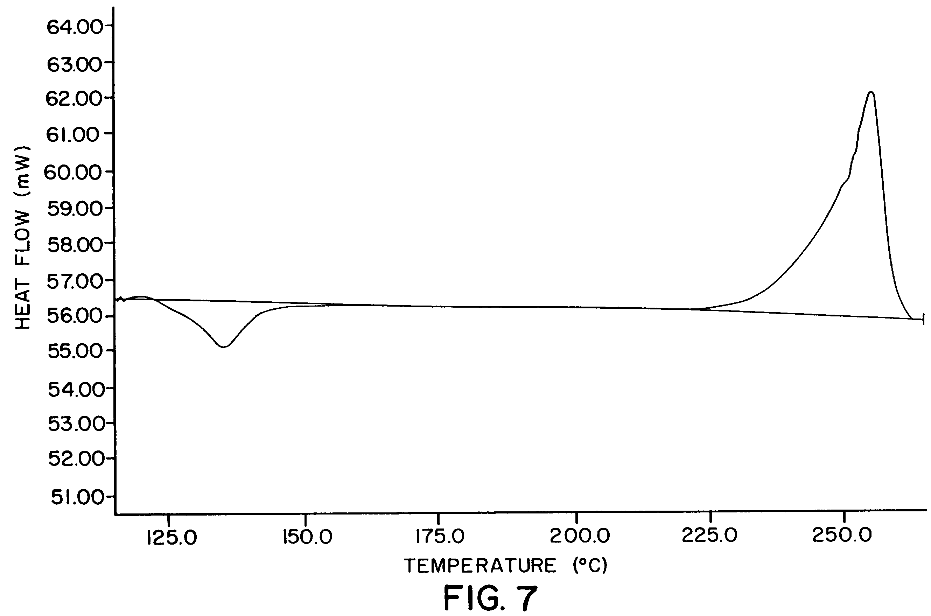

A commercial PET product made by the glass-to-mold process was obtained and analyzed by DSC to determine the amount of recrystallization upon heating. 6.0 mg of the product of this Example was analyzed by DSC by heating the material from about 50°C to about 300°C, at a rate of 20°C/min. The resulting thermogram is depicted in Figure 7. As can be seen from the Figure, significant recrystallization was detected, as is evidenced by the exotherm between about 120°C and about 170°C. As in the previous Comparative Examples, this material would also exhibit excess shrinkage (low dimensional stability) at elevated temperatures due to the recrystallization process.

Comparative Example 4.

Another commercial product consisting of polyethylene terephthalate made by the glass-to-mold, two-step manufacturing process was analyzed by DSC to determine the amount of recrystallization the product undergoes with heating.

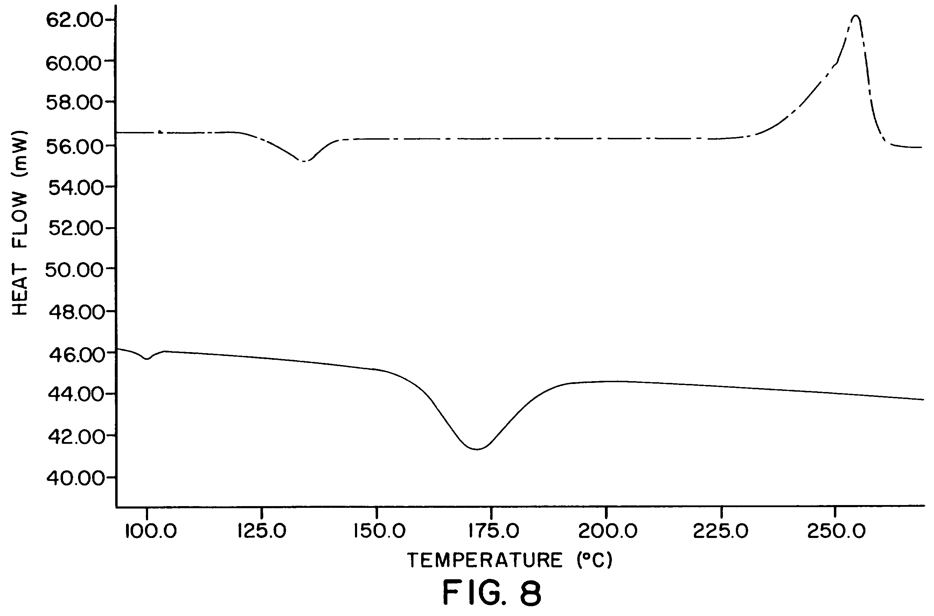

Figure 8 depicts a thermogram resulting from DSC analysis of 6.0 mg of the material in this example. The upper curve represents the thermogram resulting from heating the sample from about 50°C to about 300°C at a rate of 25°C/min. As can be seen from the recrystallization exotherm between about 120°C and about 140°C, this material undergoes substantial recrystallization, an thus is expected to have significant shrinkage due to recrystallization at these elevated temperatures.

Comparative Example 5.

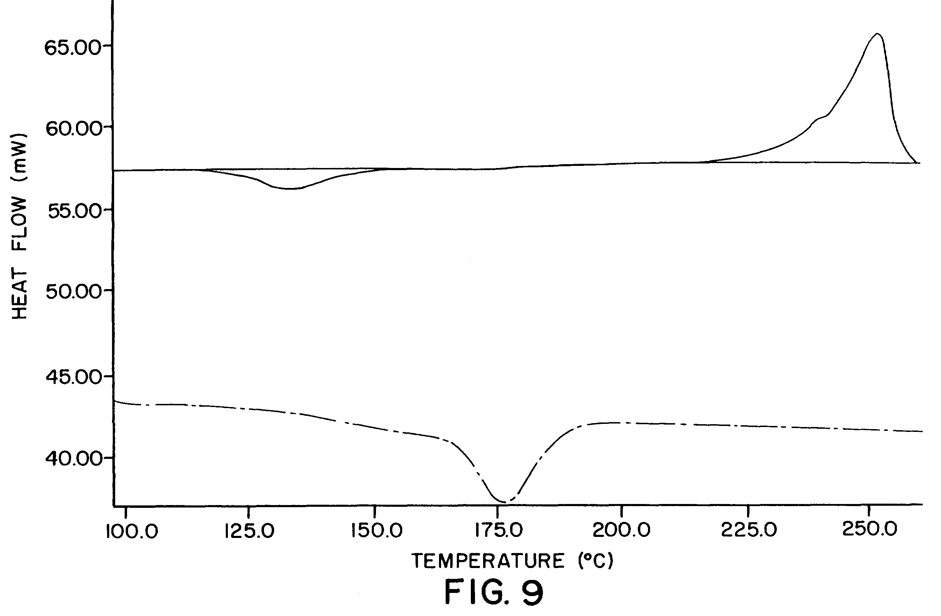

Another commercial polyethylene terephthalate product was purchased and tested by DSC for propensity to recrystallize at elevated temperature. The thermograms resulting from the DSC analysis are depicted in Figure 9.

The upper curve represents the thermogram obtained upon heating 9.8 mg of the cup material from about 50°C to about 300°C at a rate of 20°C/min. A recrystallization exotherm is detected between about 115°C and about 160°C. As calculated from the heating thermogram, the crystalline content of this material was increased more than 4 % during the heating process.

Comparative Example 6.

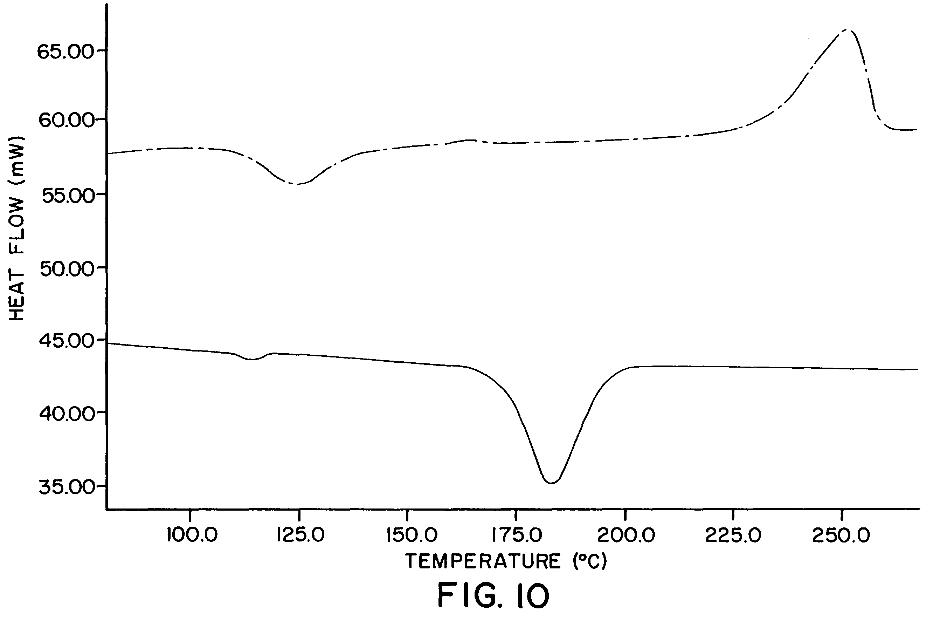

10.2 mg of another commercially available polyethylene terephthalate product was analyzed by DSC to determine the propensity of this product to recrystallize upon heating. This product is believed to be made by the two stage process where the polyester was originally manufactured by a process which thermally suppresses crystallization upon cooling. Figure 10 depicts the thermograms resulting from the DSC analysis.

The upper curve in Figure 10 is the thermogram resulting from heating the polyester material from about 50°C to about 340°C at a rate of 20°C/min. An exothermic recrystallization reaction is easily detected between about 110°C and about 140°C, indicating that this product is also dimensionally unstable due to recrystallization upon heating. The total crystallinity of the product was determined to be about 17 % of which about 11 % was due to recrystallization, indicating the crystallinity of the product increased by about 1.8 times that originally in the product at ambient temperature.

The lower curve in Figure 10 represents the DSC thermogram obtained from cooling the material of this Example from about 340°C to about 20°C, at a rate of 20°C/min. A dynamic crystallization reaction was detected in the analysis. As determined from this exothermic reaction, the maximum crystallinity attainable at this rate of cooling is about 32 %, indicating that the original product was only about one-third as crystallized as is possible for this material.

Comparative Example 7.

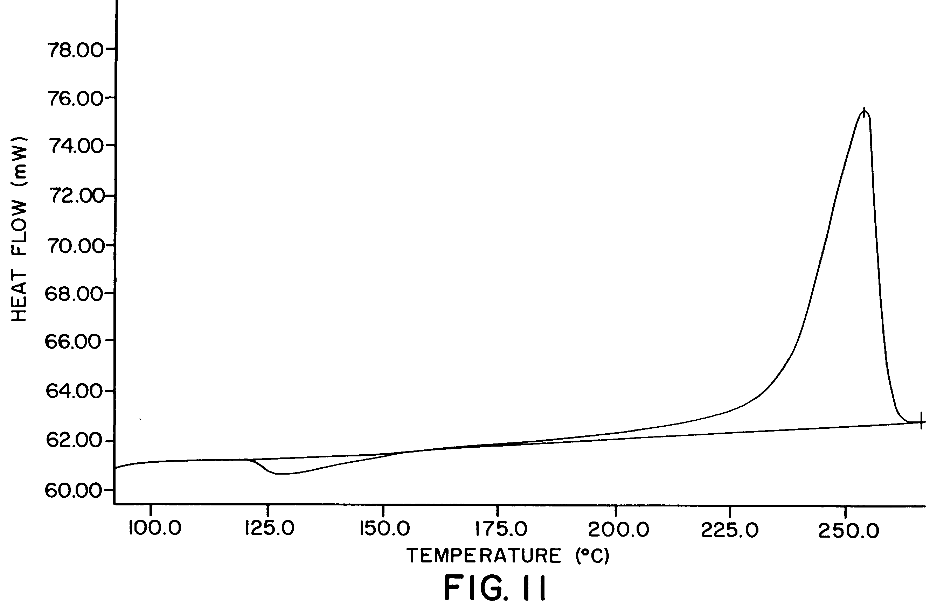

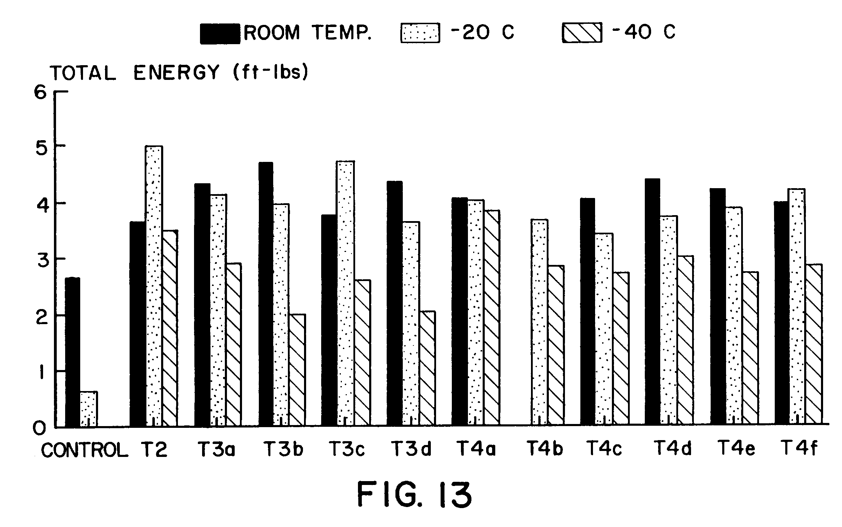

Another commercially available polyester was tested for recrystallization at elevated temperatures by DSC analysis. 16.4 mg of the product was heated from about 40°C to about 340°C at a rate of 20°C/min, with the resulting thermogram depicted in Figure 11. As in each of the other Comparative Examples, a significant amount of recrystallization was observed as is evidence by the exothermic reaction between about 120°C and about 155°C. Based upon the data in Figure 13, the crystallinity of the product material increased by about 1.5 % upon heating.

## Claims

1. A process for producing a dimensionally stable polyester with improved gas barrier properties comprising the steps:

   (a) heating a composition comprising a crystallizable polyester to a temperature above the melting point temperature of the polyester for a time sufficient to bring said polyester to a substantially amorphous (greater than 99 weight %) molten state;
   (b) controlling cooling of the composition as obtained in step (a) so as to maintain the polyester at a temperature above the peak crystallisation rate temperature of said crystallizable polyester, while simultaneously contacting said polyester to a surface capable of imparting shape to said polyester, for 20 seconds to 5 minutes,
   (c) continuing controlled cooling of the composition by contacting the composition to surface capable of imparting shape at a cooling rate of 5°C to 80°C per minute, the said contact surface being at a temperature of at least the lower boundary crystallization temperature from melt of said polyester to provide a polyester wherein said polyester has an oxygen permeability of from 0.2 to 4.9 cc-0.025 mm/650 cm$^2$-24 hrs-atm at 23°C and at 100 % relative humidity inside and 60 % relative humidity outside ; and an enthalpy of recrystallization from 0 to -2.1 calories per gram as determined by differential scanning calorimetry at a heating rate of 25°C/min, and having a linear dimensional shrinkage of from 0 % to 6 % when heated from -60°C to 200°C.

2. The process as set forth in claim 1 wherein said polyester has an oxygen permeability of from 0.2 to 3 cc-0.025 mm/650 cm$^2$-24 hrs-atm at 23°C and at 100 % relative humidity inside and 60 % relative humidity outside, preferably from 0.2 to 1 cc-0.025 mm/650 cm$^2$-24 hrs-atm at 23°C and at 100 % relative humidity inside and 60 % relative humidity outside, preferably from 0.2 to 0.8 cc-0.025 mm/650 cm$^2$-24 hrs-atm at 23°C and 60 % relative humidity.

3. The process as set forth in any one of claims 1 to 2, wherein in step (a) said composition includes a nucleant, and/or a heat stabilizer, and/or a colorant.

4. The process as set forth in any one of claims 1 to 3, wherein in step (a) said polyester is polyethylene terephthalate, polypropylene terephthalate, polybutylene terephthalate, polymethylpentene terephthalate, polyethylene naphthalate, polypropylene naphthalate, polybutylene naphthalate, polycycloterephthalic acid of mixtures thereof, and preferably is derived from a 1,4 terephthalic acid or a 1-alkylester or a 1,4-dialkylester derivative thereof or is PET terephthalate homopolymer.

5. The process as set forth in any of claims 1 to 4, wherein in step (a) said heating is to a temperature of from 260°C to 305°C.

6. A process for producing a dimensionally stable, polyester with improved gas barrier properties as set forth in any one of claims 1 to 5 wherein step (c) contact time is from 20 seconds to 2 minutes.

7. The process as set forth in claim 1, wherein the heat of recrystallization of the crystalline composition is from 0 to -1.5 calories per gram as measured by differential scanning calorimetry, preferably from 0 to -1.0 calories per gram as measured by differential scanning calorimetry.

8. The process as set forth in claim 1, wherein in step (c) said cooling of the composition is at a rate from 10°C per minute to 50°C per minute, preferably from 15°C per minute to 25°C per minute.

9. A process for producing a dimensionally stable, polyester with improved gas barrier properties as set forth in any one of claims 1 to 8 wherein in step (c) the contact surface temperature is at the peak crystallization rate temperature from melt for the polyester.

## Patentansprüche

1. Ein Verfahren zur Herstellung eines formstabilen Polyesters mit verbesserten Gasbarriereeigenschaften umfassend die Schritte:

   (a) Erwarmen einer Zusammensetzung, umfassend einen kristallisierbaren Polyester, auf eine Temperatur über der Schmelzpunkttemperatur des Polyesters für eine Zeit, die ausreicht, um den Polyester in einen im wesentlichen amorphen (größer als 99 Gewichts-%) geschmolzenen Zustand zu überführen;

(b) Kontrollieren des Abkühlens der in Schritt (a) erhaltenen Zusammensetzung, so daß der Polyester bei einer Temperatur über der maximalen Kristallisationsratetemperatur des kristallisierbaren Polyesters gehalten wird, während der Polyester gleichzeitig mit einer Oberfläche für 20 Sekunden bis 5 Minuten in Kontakt gebracht wird, die in der Lage ist, dem Polyester Form zu vermitteln,

(c) Fortsetzen des kontrollierten Abkühlens der Zusammensetzung durch Inkontaktbringen der Zusammensetzung mit der formvermittelnden Oberfläche bei einer Abkühlungsrate von 5°C bis 80°C pro Minute, wobei die Kontaktoberfläche eine Temperatur aufweist, die mindestens der unteren Grenzkristallisationstemperatur von Schmelze des Polyesters entspricht, um einen Polyester zu liefern, worin der Polyester eine Sauerstoffpermeabilität von 0,2 bis 4,9 cc-0,025 mm/650 cm$^2$-24 hrs-atm bei 23°C und bei 100 % relative Luftfeuchte innen und 60 % relative Luftfeuchte außen und eine Rekristallisationsenthalpie von 0 bis -2,1 Kalorien pro Gramm, gemessen durch Differentialscanningkalorimetrie bei einer Erwärmungsrate von 25°C/min, hat und eine Schrumpfung in der linearen Dimension von 0 % bis 6% bei Erwärmung von -60°C auf 200°C aufweist.

2. Das Verfahren gemäß Anspruch 1, worin der Polyester eine Sauerstoffpermeabilität von 0,2 bis 3 cc-0,025 mm/650 cm$^2$-24 hrs-atm bei 23°C und bei 100 % relative Luftfeuchte innen und 60 % relative Luftfeuchte außen, vorzugsweise von 0,2 bis 1 cc-0,025 mm/650 cm$^2$-24 hrs-atm bei 23°C und bei 100 % relative Luftfeuchte innen und 60 % relative Luftfeuchte außen, vorzugsweise von 0,2 bis 0,8 cc-0,025 mm/650 cm$^2$-24 hrs-atm bei 23°C und 60 % relative Luftfeuchte aufweist.

3. Das Verfahren gemäß Anspruch 1 oder 2, worin in Schritt (a) die Zusammensetzung einen Keimbildner und/oder einen Hitzestabilisator und/oder ein Färbemittel einschließt.

4. Das Verfahren gemäß einem der Ansprüche 1 bis 3, worin in Schritt (a) der Polyester Polyethylenterephthalat, Polypropylenterephthalat, Polybutylenterephthalat, Polymethylpententerephthalat, Polyethylennaphthalat, Polypropylennaphthalat, Polybutylennaphthalat, Polycycloterephthalsäure oder Gemische ist und vorzugsweise von einer 1,4-Terephthalsäure oder einem 1-Alkylester- oder einem 1,4-Dialkylesterderivat davon abgeleitet ist oder PET-Terephthalathomopolymer ist.

5. Das Verfahren gemäß einem der Ansprüche 1 bis 4, worin in Schritt (a) das Erwärmen auf eine Temperatur von 260°C bis 305°C erfolgt.

6. Ein Verfahren zur Herstellung eines formstabilen Polyesters mit verbesserten Gasbarriereeigenschaften gemäß einem der Ansprüche 1 bis 5, worin die Schritt (c)-Kontaktzeit von 20 Sekunden bis 2 Minuten beträgt.

7. Das VErfahren gemäß Anspruch 1, worin die Rekristallisationswarme der kristallinen Zusammensetzung von 0 bis -1,5 Kalorien pro Gramm, gemessen durch Differentialscanningkalorimetrie, vorzugsweise von 0 bis -1,0 Kalorien pro Gramm, gemessen durch Differentialscanningkaloriemetrie, beträgt.

8. Das Verfahren gemäß Anspruch 1, worin in Schritt (c) das Abkühlen der Zusammensetzung bei einer Rate von 10°C pro Minute bis 50°C pro Minute, vorzugsweise von 15°C pro Minute bis 25°C pro Minute erfolgt.

9. Ein Verfahren zur Herstellung eines formstabilen Polyesters mit verbesserten Gasbarriereeigenschaften gemäß einem der Ansprüche 1 bis 8, worin in Schritt (c) die Kontaktoberflächentemperatur bei der maximalen Kristallisationsratetemperatur von Schmelze für den Polyester liegt.

**Revendications**

1. Procédé pour la production d'un polyester à dimension stable présentant des propriétés améliorées d'imperméabilité au gaz comprenant les étapes :

(a) de chauffage de la composition comprenant un polyester cristallisable à une température supérieure à la température de point de fusion du polyester, ceci pendant un temps suffisant pour ramener ledit polyester à un état fondu sensiblement amorphe (supérieur à 99 % en poids);

(b) le contrôle du refroidissement de la composition obtenue à l'étape (a) de sorte à maintenir le polyester à une température supérieure à la température limite de vitesse de cristallisation (《《the peak crystallisation rate temperature 》》) dudit polyester cristallisable, et pendant la mise en contact simultanée polyester avec une surface capable de lui transmettre une forme, pendant un temps de 20 secondes à 5 minutes,

(c) la poursuite du refroidissement contrôlé de la composition par la mise en contact de la composition avec une surface capable de communiquer une forme à une vitesse de refroidissement de 5°C à 80°C par minute, ladite surface de contact se situant à une température au moins à la limite inférieure de la température de cristallisation dudit polyester fondu(《《 being at a temperature of at least the lower boundary cristallization temperature from melt of said polyester 》》) de telle manière à procurer un polyester dans lequel ledit polyester présente une perméabilité à l'oxygène de 0,2 à 4,9 cc-0,025 mm/650 cm$^2$-24 hrs-atm à 23°C et 100 % d'humidité relative à l'intérieur et 60 % d'humidité relative à l'extérieur; et une enthalpie de recristallisation de 0 à -2,1 calories par gramme comme déterminée par un scannage calorimétrique différente (《《 differential scanning calorimetry 》》) à une vitesse de chauffage de 25°C/min, et présentant un retrait linéaire en dimension de 0 % à 6 % lorsqu'il est chauffé de -60°C à 200°C.

2. Procédé selon la revendication 1 dans lequel ledit polyester présente une perméabilité à l'oxygène de 0,2 à 3 cc-0,025 mm/650 cm$^2$-24 hrs-atm à 23°C et à 100 % d'humidité relative à l'intérieur et 60 % d'humidité relative à l'extérieur, de préférence de 0,2 à 1 cc-0,025 mm/650 cm$^2$-24 hrs-atm à 23°C et à une humidité relative de 100 % à l'intérieur et 60 % d'humidité relative à l'extérieur, de préférence de 0,2 à 0,8 cc-0,025 mm/650 cm$^2$-24 hrs-atm à 23°C et 60 % d'humidité relative.

3. Procédé selon l'une quelconque des revendications 1 à 2, dans lequel dans l'étape (a) ladite composition comprend un inducteur de noyau (《《 nucleant 》》) et/ou un stabilisant à la chaleur, et/ou un colorant.

4. Procédé selon l'une quelconque des revendications 1 à 3, dans lequel dans l'étape (a) ledit polyester est du térephthalate de polyéthylène, du térephthalate de polypropylène, du térephthalate de polybutylène, du térephthalate de polyméthylpentène, du naphthalate de polyéthylène, du naphthalate de polypropylène, du naphthalate de polybutylène, de l'acide polycyclotérephthalique ou un mélange de ceux-ci, et est de préférence dérivé à partir de l'acide 1,4 térephthalique ou un 1-alkylester ou un 1,4-dialkylester dérivé de ou/et un homopolymère de térephthalate PET.

5. Procédé selon l'une des revendications 1 à 4 dans lequel dans l'étape (a) ledit chauffage est de 260°C à 305°C.

6. Procédé pour la production d'un polyester à dimension stable présentant des propriétés d'imperméabilité au gaz comme décrit dans l'une des revendications 1 à 5 dans lequel dans l'étape (c) le temps de contact va de 20 secondes à 2 minutes.

7. Procédé selon la revendication 1, dans lequel l'énergie de recristallisation de la composition cristalline est de 0 à -1,5 calories par gramme telle que mesurée par un scannage calorimétrique différente, de préférence de 0 à -1,0 calories par gramme comme mesurée par scannage calorimétrique différentiel.

8. Procédé selon la revendication 1, dans lequel dans l'étape (c) ledit refroidissement de la composition se fait à une vitesse de 10°C par minute à 50°C par minute, de préférence de 15°C par minute à 25°C par minute.

9. Procédé pour la production d'un polyester à dimension stable avec des propriétés d'imperméabilité au gaz telles que présentées dans l'une quelconque des revendications 1 à 8 dans lequel dans l'étape (c) la température de surface de contact se situe à la température limite de vitesse de cristallisation pour le polyester fondu.

FIG. I

EP 0 625 091 B1

FIG. 2

FIG. 3

EP 0 625 091 B1

FIG. 4

EP 0 625 091 B1

FIG. 5

FIG. 6

FIG. 7

EP 0 625 091 B1

FIG. 8

EP 0 625 091 B1

FIG. 9

FIG. 10

EP 0 625 091 B1

FIG. II

FIG. 12

EP 0 625 091 B1

FIG. 13

EP 0 625 091 B1

FIG. 14A

FIG. 14B

35

FIG. 15A

FIG. 15B

EP 0 625 091 B1